(19) **Europäisches Patentamt**
**European Patent Office**
**Office européen des brevets**

(11) **EP 3 417 310 B1**

(12) **FASCICULE DE BREVET EUROPEEN**

(45) Date de publication et mention
de la délivrance du brevet:
**04.12.2019 Bulletin 2019/49**

(51) Int Cl.:
*G01S 11/02* (2010.01)      *G01S 3/50* (2006.01)
*G01S 3/00* (2006.01)       *G01S 5/02* (2010.01)
*G01S 5/12* (2006.01)

(21) Numéro de dépôt: **17705424.4**

(22) Date de dépôt: **16.02.2017**

(86) Numéro de dépôt international:
**PCT/EP2017/053567**

(87) Numéro de publication internationale:
**WO 2017/140820 (24.08.2017 Gazette 2017/34)**

(54) **PROCÉDÉ DE LOCALISATION DE SOURCES D'ÉMISSION D'IMPULSIONS ÉLECTROMAGNÉTIQUES DANS UN ENVIRONNEMENT COMPRENANT DES RÉFLECTEURS**

VERFAHREN ZUR ORTUNG ELEKTROMAGNETISCHER IMPULSEMISSIONSQUELLEN IN EINER UMGEBUNG MIT REFLEKTOREN

METHOD FOR LOCATING ELECTROMAGNETIC PULSE EMISSION SOURCES IN AN ENVIRONMENT INCLUDING REFLECTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2016 FR 1600272**

(43) Date de publication de la demande:
**26.12.2018 Bulletin 2018/52**

(73) Titulaire: **Thales**
**92400 Courbevoie (FR)**

(72) Inventeurs:
• **JAHAN, Daniel**
**29200 Brest (FR)**
• **GIACOMETTI, Romain**
**29200 Brest (FR)**
• **CORNU, Cédric**
**29200 Brest (FR)**

(74) Mandataire: **Lavoix**
**2, place d'Estienne d'Orves**
**75441 Paris Cedex 09 (FR)**

(56) Documents cités:
**EP-A1- 2 428 810        US-A1- 2011 140 966
US-A1- 2015 323 642**

EP 3 417 310 B1

**Description**

La présente invention concerne un procédé de localisation d'au moins deux sources d'émission d'impulsions électromagnétiques dans un environnement, l'environnement comprenant au moins deux réflecteur, le procédé comprenant les étapes de :

- réception, par un détecteur, pour chaque source à localiser, d'au moins une même impulsion émise, reçue d'une part en direct de ladite source et reçue d'autre part par réflexion sur l'un des réflecteurs,
- mesure de la direction d'arrivée, de la date d'arrivée, de la puissance et d'au moins une caractéristique technique invariante de chaque impulsion reçue,
- identification de sous-ensembles directs et de sous-ensembles réfléchis, chaque sous-ensemble direct comprenant des impulsions reçues en direct d'une même source à localiser, chaque sous-ensemble réfléchi comprenant des impulsions émises par une même source à localiser et reçues après réflexion sur un même réflecteur,
- regroupement par paire de sous-ensembles directs avec des sous-ensembles réfléchis, les impulsions des sous-ensembles de chaque paire ayant les mêmes caractéristiques techniques invariantes,
- calcul, pour chaque paire, des différences de dates d'arrivée entre les impulsions du sous-ensemble réfléchi et les impulsions du sous-ensemble direct de la paire,
- détermination de la distance de chaque source au détecteur à partir des différences de dates d'arrivée calculées et des directions d'arrivée des impulsions de chaque paire.

La localisation d'une source consiste à déterminer la direction et la distance de la source par rapport à un point de référence. Une telle localisation est généralement basée sur un principe de multistatisme consistant à observer la source sous différents angles.

Pour localiser une source, une méthode connue, utilisant le principe de la triangulation, consiste à mesurer la direction d'arrivée des impulsions émises par la source au moyens de plusieurs détecteurs, délocalisés les uns des autres. La triangulation est une technique permettant de déterminer la position d'un point en mesurant les angles entre ce point et d'autres points de référence dont la position est connue.

Toutefois, une telle méthode impose d'utiliser un réseau de détecteurs et donc nécessairement un système de coordination des détecteurs du réseau, ce qui outre le coût lié au nombre de détecteurs, exclut la possibilité de travailler avec un unique détecteur.

Il a également été développé une méthode de localisation consistant à disposer un unique détecteur sur un porteur ayant une vitesse de défilement relativement élevée par rapport à la source à localiser. Un tel défilement relatif permet d'obtenir un ensemble de directions d'arrivée dans le temps, dont le point de concours est l'endroit où se situe la source.

Cependant, l'obtention d'un défilement relatif impose un porteur particulièrement véloce par rapport aux sources à localiser, ce qui rend la méthode inadaptée dans le cas d'une source en déplacement.

Une autre méthode connue repose sur la mesure des différences de temps de passage de lobe d'antenne (abrégé en DTPLA).

Néanmoins, de telles mesures supposent de connaître la vitesse de rotation du lobe d'antenne et donc d'effectuer des balayages circulaires, ce qui implique une acquisition relativement lente.

Il est également connu d'utiliser la différence de temps d'arrivée (abrégé en TDOA) d'un même signal arrivant en deux points de réception différents pour localiser une source. Une telle différence de temps permet de déterminer le lieu géométrique où se situe la source.

Toutefois, là encore au moins deux détecteurs sont requis, ce qui exclut la possibilité de travailler avec un seul détecteur.

Des méthodes combinant des mesures de TDOA et de DTPLA à partir d'un unique détecteur sont également connues.

En revanche, comme cela a été expliqué précédemment, les mesures de DTPLA exigent des balayages circulaires, ce qui est à la fois lent et incertain.

Il est également connu des méthodes permettant de localiser des couples de sources dans un environnement comprenant au moins lesdites sources et deux réflecteurs. De telles méthodes sont basées sur le calcul des différences de dates d'arrivée entre les impulsions émises par lesdites sources et reçues directement sur le détecteur et les impulsions émises par lesdites sources et reçues sur le détecteur après réflexion sur l'un des réflecteurs.

Cependant, la précision de telles méthodes peut encore être améliorée.

Les documents US 2011/0140966 A, EP 2 428 810 A et US 2015/0323642 A décrivent des exemples de procédés de localisation de sources.

Il existe donc un besoin pour un procédé permettant de localiser de manière précise des sources dans un environnement à partir d'un unique détecteur quasi-statique par rapport aux sources à localiser.

A cet effet, l'invention a pour objet un procédé de localisation du type précité, caractérisé en ce que l'étape d'identification comprend :

- le regroupement dans des sous-ensembles des impulsions reçues de mêmes caractéristiques techniques invariantes et de mêmes directions d'arrivée,
- la détermination de la puissance maximale des impulsions de chaque sous-ensemble et du nombre d'impulsions de chaque sous-ensemble,
- pour chaque sous-ensemble, lorsqu'une première condition est réalisée, alors le sous-ensemble comprend des impulsions reçues en direct, la première condition stipulant que la puissance maximale déterminée pour ledit sous-ensemble est supérieure ou égale à un premier seuil prédéterminé de puissance et que le nombre d'impulsions déterminé pour ledit sous-ensemble est égal au nombre d'impulsions maximal parmi les nombres d'impulsions des sous-ensembles de mêmes caractéristiques techniques invariantes que ledit sous-ensemble quelle que soit la direction d'arrivée desdits sous-ensembles,
- pour chaque sous-ensemble, lorsqu'une deuxième condition est réalisée, alors les impulsions dudit sous-ensemble sont identifiées reçues en réfléchi et le sous-ensemble est un sous-ensemble réfléchi, la deuxième condition stipulant que la puissance maximale déterminée pour ledit sous-ensemble est strictement inférieure à un deuxième seuil prédéterminé de puissance et que le nombre d'impulsions déterminé pour ledit sous-ensemble est strictement inférieur au nombre d'impulsions maximal parmi les nombres d'impulsions des sous-ensembles de mêmes caractéristiques techniques invariantes que ledit sous-ensemble quelle que soit la direction d'arrivée desdits sous-ensembles.

Suivant des modes de mise en oeuvre particuliers, le procédé de localisation comprend une ou plusieurs des caractéristiques suivantes, prises isolément ou suivant toutes les combinaisons techniquement possibles :

- pour chaque sous-ensemble, lorsque la première condition est réalisée, l'étape d'identification comprend, en outre :

  ∘ l'établissement d'une première distribution statistique des écarts entre les dates d'arrivée successives des impulsions dudit sous-ensemble, ayant une puissance supérieure ou égale à la moitié de la puissance maximale, l'établissement d'une deuxième distribution statistique des écarts entre les dates d'arrivée successives des impulsions dudit sous-ensemble,
  ∘ lorsque la deuxième distribution statistique est identique à la première distribution statistique, alors les impulsions dudit sous-ensemble sont identifiées reçues en direct et le sous-ensemble est un sous-ensemble direct,
  ∘ lorsque la deuxième distribution statistique comprend des écarts différents des écarts de la première distribution statistique et inférieurs ou égaux à un troisième seuil prédéterminé, alors les impulsions dont sont issus lesdits écarts différents sont identifiées reçues en réfléchi et forment un sous-ensemble réfléchi et les impulsions restantes dudit sous-ensemble sont identifiées reçues en direct et forment un sous-ensemble direct.

- l'étape de détermination comprend, pour chaque sous-ensemble direct, l'établissement d'une cartographie représentant l'ensemble des différences de date d'arrivée calculées à partir des impulsions dudit sous-ensemble direct, en fonction des directions d'arrivée des impulsions réfléchies correspondant auxdites différences de date d'arrivée calculées, la distance de chaque source au détecteur étant déterminée en fonction des cartographies établies pour chaque sous-ensemble direct.
- pour chaque couple formé de deux sous-ensembles directs dont les impulsions ont des directions d'arrivée différentes et des caractéristiques techniques invariantes différentes, l'étape de détermination comprend, en outre, l'identification à partir des cartographies établies pour lesdits sous-ensembles directs, d'une ou plusieurs configurations géométriques, chaque configuration géométrique étant choisie parmi les configurations suivantes :

  ∘ une première configuration dans laquelle ledit couple de sous-ensembles directs correspond à deux sources à localiser, les impulsions émises par lesdites sources se réfléchissant sur deux réflecteurs, l'un des réflecteurs étant confondu avec l'une desdites sources et l'autre réflecteur étant confondu avec l'autre desdites sources, la première configuration étant associée à : un premier retard relatif à la réflexion des impulsions émises par une première desdites sources sur le réflecteur confondu avec l'autre source et un deuxième retard relatif à la réflexion des impulsions émises par une deuxième desdites sources sur le réflecteur confondu avec l'autre source,
  ∘ une deuxième configuration dans laquelle ledit couple de sous-ensembles directs correspond à deux sources à localiser, les impulsions émises par lesdites sources se réfléchissant sur deux réflecteurs, l'un des réflecteurs étant distinct desdites sources et l'autre des réflecteurs étant confondu avec l'une desdites sources, la deuxième configuration étant associée à : un premier retard relatif à la réflexion des impulsions émises par une première desdites sources sur le réflecteur confondu avec l'autre source, un deuxième retard relatif à la réflexion des impulsions émises par la première desdites sources sur le réflecteur distinct, et un troisième retard relatif à la réflexion des impulsions émises par une deuxième desdites sources sur le réflecteur distinct,

◦ une troisième configuration dans laquelle ledit couple de sous-ensembles directs correspond à deux sources à localiser, les impulsions émises par lesdites sources se réfléchissant sur deux réflecteurs distincts desdites sources, la troisième configuration étant associée à : un premier retard relatif à la réflexion des impulsions émises par une première desdites sources sur un premier desdits réflecteurs, un deuxième retard relatif à la réflexion des impulsions émises par une deuxième desdites sources sur le premier desdits réflecteurs, un troisième retard relatif à la réflexion des impulsions émises par la première desdites sources sur un deuxième desdits réflecteurs, et un quatrième retard relatif à la réflexion des impulsions émises par la deuxième desdites sources sur le deuxième desdits réflecteurs,

la distance de chaque source au détecteur étant déterminée en fonction des retards associés à chaque configuration déterminée et des directions d'arrivée des impulsions correspondant auxdits retards.

- chaque configuration permet de déterminer les distances respectives de deux des sources à localiser au détecteur, lesdites distances étant calculées :

◦ pour chaque première configuration à partir des équations suivantes :

$$\begin{cases} RE_{i_1} = \dfrac{\Delta_{E_{i_2},s_{n_1}}{}^2 + 2\Delta_{E_{i_2},s_{n_1}} \cdot RE_{i_2}}{2\Delta_{E_{i_2},s_{n_1}} + 2\left(1 - \cos\left(\alpha_{E_{i_2},s_{n_1}}\right)\right) \cdot RE_{i_2}} \\[4ex] RE_{i_2} = \dfrac{\Delta_{E_{i_1},s_{n_2}}{}^2 + 2\Delta_{E_{i_1},s_{n_2}} \cdot RE_{i_1}}{2\Delta_{E_{i_1},s_{n_2}} + 2\left(1 - \cos\left(\alpha_{E_{i_1},s_{n_2}}\right)\right) \cdot RE_{i_1}} \end{cases}$$

◦ pour chaque deuxième configuration à partir des équations suivantes :

$$\begin{cases} \dfrac{\Delta_{E_{i_1},s_{n_1}}{}^2 + 2\Delta_{E_{i_1},s_{n_1}} \cdot RE_{i_1}}{2\Delta_{E_{i_1},s_{n_1}} + 2\left(1 - \cos\left(\alpha_{E_{i_1},s_{n_1}}\right)\right) \cdot RE_{i_1}} = \dfrac{\Delta_{E_{i_2},s_{n_1}}{}^2 + 2\Delta_{E_{i_2},s_{n_1}} \cdot RE_{i_2}}{2\Delta_{E_{i_2},s_{n_1}} + 2\left(1 - \cos\left(\alpha_{E_{i_2},s_{n_1}}\right)\right) \cdot RE_{i_2}} \\[4ex] RE_{i_2} = \dfrac{\Delta_{E_{i_1},s_{n_2}}{}^2 + 2\Delta_{E_{i_1},s_{n_2}} \cdot RE_{i_1}}{2\Delta_{E_{i_1},s_{n_2}} + 2\left(1 - \cos\left(\alpha_{E_{i_1},s_{n_2}}\right)\right) \cdot RE_{i_1}} \end{cases}$$

ou

$$\begin{cases} RE_{i_1} = \dfrac{\Delta_{E_{i_2},s_{n_1}}{}^2 + 2\Delta_{E_{i_2},s_{n_1}} \cdot RE_{i_2}}{2\Delta_{E_{i_2},s_{n_1}} + 2\left(1 - \cos\left(\alpha_{E_{i_2},s_{n_1}}\right)\right) \cdot RE_{i_2}} \\[4ex] \dfrac{\Delta_{E_{i_1},s_{n_2}}{}^2 + 2\Delta_{E_{i_1},s_{n_2}} \cdot RE_{i_1}}{2\Delta_{E_{i_1},s_{n_2}} + 2\left(1 - \cos\left(\alpha_{E_{i_1},s_{n_2}}\right)\right) \cdot RE_{i_1}} = \dfrac{\Delta_{E_{i_2},s_{n_2}}{}^2 + 2\Delta_{E_{i_2},s_{n_2}} \cdot RE_{i_2}}{2\Delta_{E_{i_2},s_{n_2}} + 2\left(1 - \cos\left(\alpha_{E_{i_2},s_{n_2}}\right)\right) \cdot RE_{i_2}} \end{cases}$$

◦ pour chaque troisième configuration à partir des équations suivantes :

$$\begin{cases} \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[2em] \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \end{cases}$$

Où

- $\Delta_{E_{i_1},S_{n_1}} = c.\tau_{E_{i1},S_{n1}}, \quad \Delta_{E_{i_2},S_{n_2}} = c.\tau_{E_{i2},S_{n2}}, \quad \Delta_{E_{i_2},S_{n_1}} = c.\tau_{E_{i2},S_{n1}}, \quad \Delta_{E_{i_1},S_{n_2}} = c.\tau_{E_{i1},S_{n2}},$
- $RE_{i1}$ est la distance de la première source $E_{i1}$ au détecteur R,
- $RE_{i2}$ est la distance de la deuxième source $E_{i2}$ au détecteur R,
- C'est la vitesse de propagation des ondes électromagnétiques,
- $\tau_{E_{i1},S_{n1}}$ est la différence de date d'arrivée entre les impulsions reçues par réflexion sur un premier réflecteur par rapport aux impulsions reçues en direct de la première source,
- $\tau_{E_{i2},S_{n2}}$ est la différence de date d'arrivée entre les impulsions reçues par réflexion sur un deuxième réflecteur par rapport aux impulsions reçues en direct de la deuxième source,
- $\tau_{E_{i2},S_{n1}}$ est la différence de date d'arrivée entre les impulsions reçues par réflexion sur le premier réflecteur par rapport aux impulsions reçues en direct de la deuxième source,
- $\tau_{E_{i1},S_{n2}}$ est la différence de date d'arrivée entre les impulsions reçues par réflexion sur le deuxième réflecteur par rapport aux impulsions reçues en direct de la première source,
- $\alpha_{E_{i_2},S_{n_2}}$ est l'écart angulaire entre la deuxième source et le deuxième réflecteur vu depuis le détecteur,
- $\alpha_{E_{i_1},S_{n_1}}$ est l'écart angulaire entre la première source et le premier réflecteur vu depuis le détecteur,
- $\alpha_{E_{i_2},S_{n_1}}$ est l'écart angulaire entre la deuxième source et le premier réflecteur vu depuis le détecteur, et
- $\alpha_{E_{i_1},S_{n_2}}$ est l'écart angulaire entre la deuxième source et le premier réflecteur vu depuis le détecteur.

- la ou les configurations identifiées pour chaque couple de sous-ensembles directs permettent d'obtenir au moins une distance de chaque source au détecteur, la distance déterminée pour chaque source étant la distance la plus occurrente parmi la ou les valeurs de distance obtenues pour ladite source.
- la ou les configurations identifiées pour chaque couple de sous-ensembles directs permettent, également, d'obtenir au moins une distance de chaque réflecteur au détecteur.
- l'étape de calcul des différences de date d'arrivée de chaque paire comprend l'élimination des différences de date d'arrivée strictement supérieures à un quatrième seuil prédéterminé et dont le nombre d'occurrence est supérieur ou égal à un cinquième seuil prédéterminé.
- les caractéristiques invariantes de chaque impulsion comprennent au moins l'une des caractéristiques parmi : la largeur de l'impulsion, la fréquence porteuse de l'impulsion et la modulation intra-impulsion intentionnelle.

L'invention concerne aussi un dispositif de localisation d'au moins deux sources d'émission d'impulsions électromagnétiques dans un environnement, l'environnement comprenant au moins deux réflecteurs, le détecteur étant propre à mettre en oeuvre les étapes du procédé tel que défini plus haut.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'un exemple d'une source à localiser, d'un réflecteur et d'un détecteur configuré pour localiser la source,

- figure 2, une vue schématique d'un exemple d'une première configuration de deux sources à localiser et de deux réflecteurs, chaque source étant colocalisée avec un réflecteur,

- figure 3, une vue schématique d'un exemple d'une deuxième configuration de deux sources à localiser et de deux réflecteurs, l'une des sources étant colocalisée avec un réflecteur,

- figure 4, une vue schématique d'un autre exemple d'une deuxième configuration de deux sources à localiser et de deux réflecteurs,

- figure 5, une vue schématique d'un exemple d'une troisième configuration de deux sources à localiser et de deux réflecteurs, les sources n'étant pas colocalisées avec les réflecteurs,

- figure 6, une vue schématique et fonctionnelle du détecteur de la figure 1,

- figure 7, un organigramme d'un exemple de mise en oeuvre d'un procédé de localisation de sources.

- figure 8, une cartographie représentant les différences de date d'arrivée obtenues pour une même source, en fonction des directions d'arrivées des impulsions réfléchies correspondantes, et

- figure 9, une superposition des cartographies obtenues pour deux sources distinctes.

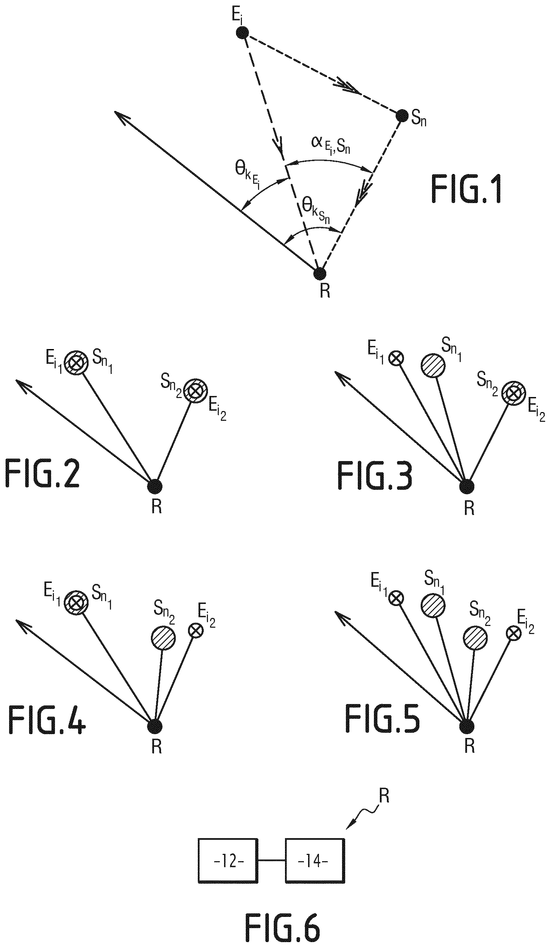

Un principe général de mise en oeuvre de l'invention est décrit dans ce qui suit, sur la base de la figure 1.

La figure 1 illustre une source d'émission $E_i$, un réflecteur $S_n$ et un détecteur R, formant les trois points d'un triangle bistatique $E_i R S_n$.

Chaque source d'émission $E_i$ est, par exemple, une source d'émission radar, c'est-à-dire une source d'émissions électromagnétiques modulées, et plus particulièrement modulées par impulsions, de préférence modulées en amplitude par impulsions. Une telle modulation d'amplitude par impulsions permet, en effet, une mesure simplifiée de la date du front montant ou de la date d'arrivée de l'impulsion par rapport à d'autres types de modulation.

Chaque source $E_i$ est, par exemple, disposée en mer sur des navires délocalisés les uns des autres.

Un but de l'invention est de localiser les sources $E_i$ au moyen d'un unique détecteur de radars R placé à distance des sources $E_i$, comme cela est illustré par la figure 1.

Le détecteur de radars R reçoit le signal $I_{E_i}$ correspondant à l'impulsion émise par la source $E_i$ en direct, c'est-à-dire après avoir parcouru le chemin $E_i R$. Ce signal est caractérisé par des caractéristiques $a_{j_{E_i}}$, une date d'arrivée $t_{E_i}$ et une direction d'arrivée $\theta_{k_{E_i}}$ mesurées par le détecteur R.

Le détecteur de radars R reçoit également le signal $I_{E_i,S_n}$ correspondant à la même impulsion émise par la source $E_i$ et réfléchie sur le réflecteur $S_n$, c'est-à-dire après avoir parcouru le chemin $E_i S_n + S_n R$. Ce signal est caractérisé par des caractéristiques $a_{E_i,S_n}$, une date d'arrivée $t_{E_i,S_n}$ et une direction d'arrivée $\theta_{k_{S_n}}$ mesurées par le détecteur R.

Ainsi, pour la source $E_i$ et le réflecteur $S_n$, le détecteur R reçoit les deux signaux : $I_{E_i}\left(a_{E_i}, \theta_{k_{E_i}}, t_{E_i}\right)$ et $I_{E_i,S_n}\left(a_{E_i,S_n}, \theta_{k_{S_n}}, t_{E_i,S_n}\right)$.

A partir des signaux $I_{E_i}\left(a_{E_i}, \theta_{k_{E_i}}, t_{E_i}\right)$ et $I_{E_i,S_n}\left(a_{E_i,S_n}, \theta_{k_{S_n}}, t_{E_i,S_n}\right)$, le détecteur R déduit la différence de temps d'arrivée $\tau_{E_i,S_n}$ et la différence de directions d'arrivée $\alpha_{E_i,S_n}$ entre l'impulsion reçue en direct et l'impulsion reçue en réfléchie à partir d'une même émission, soit donc :

$$\tau_{E_i,S_n} = t_{E_i,S_n} - t_{E_i} \qquad (1)$$

$$\alpha_{E_i,S_n} = \theta_{k_{E_i}} - \theta_{k_{S_n}} \qquad (2)$$

La différence de trajets $E_i S_n + R S_n - R E_i = c\tau_{E_i,S_n}$ est appelée la distance bistatique associée et est notée $\Delta_{E_i,S_n}$, soit :

$$\Delta_{E_i,S_n} = c\tau_{E_i,S_n} \qquad (3)$$

Une telle expression permet d'obtenir l'expression suivante de la distance $E_i S_n$ entre la source $E_i$ et le réflecteur $S_n$ :

$$E_i S_n = \Delta_{E_i,S_n} + R E_i - R S_n \qquad (4)$$

L'application du théorème du cosinus au triangle $E_iRS_n$ permet d'écrire l'équation suivante :

$$E_iS_n{}^2 = RS_k{}^2 + RE_i{}^2 - 2RE_i \cdot RS_n \cdot \cos\left(\alpha_{E_i,S_n}\right) \tag{5}$$

En éliminant le terme $E_iS_n$ des expressions (4) et (5), l'expression suivante de la distance $RS_n$ entre le réflecteur $S_n$ et le détecteur R est obtenue :

$$RS_n = \frac{\Delta_{E_i,S_n}{}^2 + 2\Delta_{E_i,S_n} \cdot RE_i}{2\Delta_{E_i,S_n} + 2RE_i \cdot \left(1 - \cos\left(\alpha_{E_i,S_n}\right)\right)} \tag{6}$$

Dans le cas de l'emploi d'un unique détecteur R, la résolution du problème de localisation à partir de mesures de direction d'arrivée et de temps d'arrivée, repose sur le fait que la zone étudiée comporte au minimum deux sources $E_i$ non colocalisées l'une avec l'autre, $E_{i1}$ et $E_{i2}$, et deux réflecteurs $S_n$ également non colocalisés l'un avec l'autre, $S_{n1}$ et $S_{n2}$. Une ou plusieurs colocalisations d'une source $E_i$ avec un réflecteur $S_n$ est par contre acceptable. Deux éléments sont considérés « colocalisés » lorsque les positions de chaque élément sont identiques ou quasiment confondues au regard des précisions de mesure.

A partir de deux sources et de deux réflecteurs, il existe donc quatre configurations possibles. Ces configurations sont illustrées par les figures 2 à 5.

En particulier, la figure 2 illustre une première configuration dans laquelle les deux sources ne sont ni colocalisées entre elles, ni alignées avec le détecteur R et chaque source est colocalisée avec un réflecteur. La première configuration de la figure 2 comprend deux triangles bistatiques non dégénérés $E_{i1}RS_{n2}$ et $E_{i2}RS_{n1}$ et deux triangles bistatiques dégénérés $E_{i1}RS_{n1}$ et $E_{i2}RS_{n2}$. Un triangle est dit dégénéré lorsqu'il se résume à un segment.

Les figures 3 et 4 illustrent chacune une deuxième configuration dans laquelle les deux sources ne sont ni colocalisées entre elles, ni alignées avec le détecteur R et une seule source est colocalisée avec un réflecteur, l'autre source et l'autre réflecteur n'étant ni colocalisés, ni alignés avec le détecteur R. La deuxième configuration de la figure 3 comprend trois triangles bistatiques non dégénérés $E_{i1}RS_{n1}$, $E_{i1}RS_{n2}$ et $E_{i2}RS_{n1}$ et un triangle bistatique dégénéré $E_{i2}RS_{n2}$. La deuxième configuration de la figure 4 comprend trois triangles bistatiques non dégénérés $E_{i2}RS_{n2}$, $E_{i1}RS_{n2}$ et $E_{i2}RS_{n1}$ et un triangle bistatique dégénéré $E_{i1}RS_{n1}$.

La figure 5 illustre une troisième configuration dans laquelle les sources et les réflecteurs ne sont pas colocalisés entre eux, ni alignés avec le détecteur R. La troisième configuration de la figure 5 comprend quatre triangles bistatiques non dégénérés $E_{i1}RS_{n1}$, $E_{i2}RS_{n2}$, $E_{i1}RS_{n2}$ et $E_{i2}RS_{n1}$.

L'application de la relation (6) à chaque triangle bistatique possible fournit quatre expressions :

$$\text{Triangle } E_{i1}RS_{n1} \quad \Rightarrow \quad RS_{n_1} = \frac{\Delta_{E_{i_1},S_{n_1}}{}^2 + 2\Delta_{E_{i_1},S_{n_1}} \cdot RE_{i_1}}{2\Delta_{E_{i_1},S_{n_1}} + 2\left(1 - \cos\left(\alpha_{E_{i_1},S_{n_1}}\right)\right) \cdot RE_{i_1}} \tag{7.1}$$

$$\text{Triangle } E_{i1}RS_{n2} \quad \Rightarrow \quad RS_{n_2} = \frac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \tag{7.2}$$

$$\text{Triangle } E_{i2}RS_{n1} \quad \Rightarrow \quad RS_{n_1} = \frac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \tag{7.3}$$

$$\text{Triangle } E_{i2}RS_{n2} \quad \Rightarrow \quad RS_{n_2} = \frac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \tag{7.4}$$

Les expressions (7.1) à (7.4) n'ont de sens complet que pour la troisième configuration. En effet, les expressions relatives aux triangles bistatiques dégénérés n'ont pas de sens en raison des valeurs nulles correspondant aux mesures de la

distance bistatique $\Delta_{E_i,S_n}$ et de la différence d'angle d'arrivée $\alpha_{E_i,S_n}$ entre la source et le réflecteur.

Dans le cas de la troisième configuration de la figure 5, l'égalité des expressions (7.1) et (7.3) et celle des expressions (7.2) et (7.4), permet d'obtenir les équations suivantes :

$$RS_{n_1} = \frac{\Delta_{E_{i_1},S_{n_1}}{}^2 + 2\Delta_{E_{i_1},S_{n_1}} \cdot RE_{i_1}}{2\Delta_{E_{i_1},S_{n_1}} + 2\left(1 - \cos\left(\alpha_{E_{i_1},S_{n_1}}\right)\right) \cdot RE_{i_1}} = \frac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \qquad (8.1)$$

et

$$RS_{n_2} = \frac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \frac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \qquad (8.2)$$

Où

- $\Delta_{E_{i_1},S_{n_1}} = c.\tau_{E_{i1},S_{n1}}$, $\Delta_{E_{i_2},S_{n_2}} = c.\tau_{E_{i2},S_{n2}}$, $\Delta_{E_{i_2},S_{n_1}} = c.\tau_{E_{i2},S_{n1}}$, $\Delta_{E_{i_1},S_{n_2}} = c.\tau_{E_{i1},S_{n2}}$,
- $RE_{i_1}$ est la distance de la première source $E_{i1}$ au détecteur R,
- $RE_{i_2}$ est la distance de la deuxième source $E_{i2}$ au détecteur R,
- c est la vitesse de propagation des ondes électromagnétiques,
- $\tau_{E_{i1},S_{n1}}$ est la différence de date d'arrivée entre les impulsions reçues par réflexion sur un premier réflecteur par rapport aux impulsions reçues en direct de la première source,
- $\tau_{E_{i2},S_{n2}}$ est la différence de date d'arrivée entre les impulsions reçues par réflexion sur un deuxième réflecteur par rapport aux impulsions reçues en direct de la deuxième source,
- $\tau_{E_{i2},S_{n1}}$ est la différence de date d'arrivée entre les impulsions reçues par réflexion sur le premier réflecteur par rapport aux impulsions reçues en direct de la deuxième source,
- $\tau_{E_{i1},S_{n2}}$ est la différence de date d'arrivée entre les impulsions reçues par réflexion sur le deuxième réflecteur par rapport aux impulsions reçues en direct de la première source,
- $\alpha_{E_{i_2},S_{n_2}}$ est l'écart angulaire entre la deuxième source et le deuxième réflecteur vu depuis le détecteur,
- $\alpha_{E_{i_1},S_{n_1}}$ est l'écart angulaire entre la première source et le premier réflecteur vu depuis le détecteur,
- $\alpha_{E_{i_2},S_{n_1}}$ est l'écart angulaire entre la deuxième source et le premier réflecteur vu depuis le détecteur, et
- $\alpha_{E_{i_1},S_{n_2}}$ est l'écart angulaire entre la deuxième source et le premier réflecteur vu depuis le détecteur.

Les expressions (8.1) et (8.2) permettent d'obtenir un système de deux équations du type suivant :

$$\begin{cases} b_{11} + b_{12} \cdot RE_{i_1} + b_{13} \cdot RE_{i_2} + b_{14} \cdot RE_{i_1} \cdot RE_{i_2} = 0 \\ b_{21} + b_{22} \cdot RE_{i_1} + b_{23} \cdot RE_{i_2} + b_{24} \cdot RE_{i_1} \cdot RE_{i_2} = 0 \end{cases} \qquad (9)$$

Dans le cas de la deuxième configuration de la figure 3, l'expression (8.1) précédente est toujours valable, mais pas l'expression (8.2) car l'expression (7.4) n'a pas de sens. Toutefois, on peut remarquer que l'expression (7.2) est alors celle de $RE_{i_2}$, ce qui permet d'écrire :

$$RE_{i_2} = RS_{n_2} = \frac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \qquad (10)$$

Les expressions (8.1) et (10) permettent alors de retrouver le système d'équations (9).

Par symétrie, la deuxième configuration de la figure 4 aboutit au même système d'équations (9).

Dans le cas de la première configuration de la figure 2, les expressions (8.1) et (8.2) ne sont pas valables car les expressions (7.1) et (7.4) n'ont pas de sens. Toutefois, on peut remarquer que l'expression (10) est applicable et que l'expression (7.3) est alors celle de $RE_{i_1}$, ce qui permet d'écrire :

$$RE_{i_1} = RS_{n_1} = \frac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \qquad (11)$$

Les expressions (10) et (11) permettent alors de retrouver le système d'équations (9).

Un unique système d'équations (9) permet donc d'extraire les inconnues $RE_{i_1}$, $RE_{i_2}$, $RS_{n_1}$, $RS_{n_2}$, seuls les coefficients $b_{pq}$ étant différents d'une configuration à l'autre.

Un traitement unique de résolution du système d'équations (9) est donc mis en oeuvre par le détecteur R avec des coefficients $b_{pq}$ dépendant des configurations trouvées à la détection.

Les coefficients $b_{pq}$ du système (9) sont exprimés ci-après en fonction des différentes configurations :

- Pour la première configuration illustrée en figure 2 :

$$\begin{cases} b_{11} = \Delta_{E_{i_2},S_{n_1}}{}^2 \\ b_{12} = -2\Delta_{E_{i_2},S_{n_1}} \\ b_{13} = 2\Delta_{E_{i_2},S_{n_1}} \\ b_{14} = -2\left(1 - \cos\left(\alpha_{E_{i_2},S_{n_1}}\right)\right) \end{cases} \tag{12.1}$$

$$\text{et} \begin{cases} b_{21} = -\Delta_{E_{i_1},S_{n_2}}{}^2 \\ b_{22} = -2\Delta_{E_{i_1},S_{n_2}} \\ b_{23} = 2\Delta_{E_{i_1},S_{n_2}} \\ b_{24} = 2\left(1 - \cos\left(\alpha_{E_{i_1},S_{n_2}}\right)\right) \end{cases} \tag{12.2}$$

- Pour la deuxième configuration illustrée en figure 3 :

$$\begin{cases} b_{11} = 2\,\Delta_{E_{i_1},S_{n_1}}\,\Delta_{E_{i_2},S_{n_1}}\left(\Delta_{E_{i_1},S_{n_1}} - \Delta_{E_{i_2},S_{n_1}}\right) \\ b_{12} = 2\,\Delta_{E_{i_2},S_{n_1}}\left(2\Delta_{E_{i_1},S_{n_1}} - \Delta_{E_{i_2},S_{n_1}}\left(1 - \cos\left(\alpha_{E_{i_1},S_{n_1}}\right)\right)\right) \\ b_{13} = 2\,\Delta_{E_{i_1},S_{n_1}}\left(-2\Delta_{E_{i_2},S_{n_1}} + \Delta_{E_{i_1},S_{n_1}}\left(1 - \cos\left(\alpha_{E_{i_2},S_{n_1}}\right)\right)\right) \\ b_{14} = 4\,\Delta_{E_{i_1},S_{n_1}}\left(1 - \cos\left(\alpha_{E_{i_2},S_{n_1}}\right)\right) - 4\Delta_{E_{i_2},S_{n_1}}\left(1 - \cos\left(\alpha_{E_{i_1},S_{n_1}}\right)\right) \end{cases} \tag{12.3}$$

et

$$\begin{cases} b_{21} = -\Delta_{E_{i_1},S_{n_2}}{}^2 \\ b_{22} = -2\Delta_{E_{i_1},S_{n_2}} \\ b_{23} = 2\Delta_{E_{i_1},S_{n_2}} \\ b_{24} = 2\left(1 - \cos\left(\alpha_{E_{i_1},S_{n_2}}\right)\right) \end{cases} \tag{12.2}$$

- Pour la deuxième configuration illustrée en figure 4 :

$$\begin{cases} b_{11} = \Delta_{E_{i_2},S_{n_1}}{}^2 \\ b_{12} = -2\Delta_{E_{i_2},S_{n_1}} \\ b_{13} = 2\Delta_{E_{i_2},S_{n_1}} \\ b_{14} = -2\left(1 - \cos\left(\alpha_{E_{i_2},S_{n_1}}\right)\right) \end{cases} \tag{12.1}$$

et

$$\begin{cases} b_{21} = 2\,\Delta_{E_{i_1},S_{n_2}}\,\Delta_{E_{i_2},S_{n_2}}\left(\Delta_{E_{i_1},S_{n_2}} - \Delta_{E_{i_2},S_{n_2}}\right) \\[1em] b_{22} = 2\,\Delta_{E_{i_2},S_{n_2}}\left(2\Delta_{E_{i_1},S_{n_2}} - \Delta_{E_{i_2},S_{n_2}}\left(1 - \cos\left(\alpha_{E_{i_1},S_{n_2}}\right)\right)\right) \\[1em] b_{23} = 2\,\Delta_{E_{i_1},S_{n_2}}\left(-2\Delta_{E_{i_2},S_{n_2}} + \Delta_{E_{i_1},S_{n_2}}\left(1 - \cos\left(\alpha_{E_{i_2},S_{n_2}}\right)\right)\right) \\[1em] b_{24} = 4\,\Delta_{E_{i_1},S_{n_2}}\left(1 - \cos\left(\alpha_{E_{i_2},S_{n_2}}\right)\right) - 4\Delta_{E_{i_2},S_{n_2}}\left(1 - \cos\left(\alpha_{E_{i_1},S_{n_2}}\right)\right) \end{cases} \tag{12.4}$$

- Pour la troisième configuration illustrée en figure 5 :

$$\begin{cases} b_{11} = 2\,\Delta_{E_{i_1},S_{n_1}}\,\Delta_{E_{i_2},S_{n_1}}\left(\Delta_{E_{i_1},S_{n_1}} - \Delta_{E_{i_2},S_{n_1}}\right) \\[1em] b_{12} = 2\,\Delta_{E_{i_2},S_{n_1}}\left(2\Delta_{E_{i_1},S_{n_1}} - \Delta_{E_{i_2},S_{n_1}}\left(1 - \cos\left(\alpha_{E_{i_1},S_{n_1}}\right)\right)\right) \\[1em] b_{13} = 2\,\Delta_{E_{i_1},S_{n_1}}\left(-2\Delta_{E_{i_2},S_{n_1}} + \Delta_{E_{i_1},S_{n_1}}\left(1 - \cos\left(\alpha_{E_{i_2},S_{n_1}}\right)\right)\right) \\[1em] b_{14} = 4\,\Delta_{E_{i_1},S_{n_1}}\left(1 - \cos\left(\alpha_{E_{i_2},S_{n_1}}\right)\right) - 4\Delta_{E_{i_2},S_{n_1}}\left(1 - \cos\left(\alpha_{E_{i_1},S_{n_1}}\right)\right) \end{cases} \tag{12.3}$$

et

$$\begin{cases} b_{21} = 2\,\Delta_{E_{i_1},S_{n_2}}\,\Delta_{E_{i_2},S_{n_2}}\left(\Delta_{E_{i_1},S_{n_2}} - \Delta_{E_{i_2},S_{n_2}}\right) \\[1em] b_{22} = 2\,\Delta_{E_{i_2},S_{n_2}}\left(2\Delta_{E_{i_1},S_{n_2}} - \Delta_{E_{i_2},S_{n_2}}\left(1 - \cos\left(\alpha_{E_{i_1},S_{n_2}}\right)\right)\right) \\[1em] b_{23} = 2\,\Delta_{E_{i_1},S_{n_2}}\left(-2\Delta_{E_{i_2},S_{n_2}} + \Delta_{E_{i_1},S_{n_2}}\left(1 - \cos\left(\alpha_{E_{i_2},S_{n_2}}\right)\right)\right) \\[1em] b_{24} = 4\,\Delta_{E_{i_1},S_{n_2}}\left(1 - \cos\left(\alpha_{E_{i_2},S_{n_2}}\right)\right) - 4\Delta_{E_{i_2},S_{n_2}}\left(1 - \cos\left(\alpha_{E_{i_1},S_{n_2}}\right)\right) \end{cases} \tag{12.4}$$

De la première équation du système (9), on peut exprimer, par exemple, $RE_{i_1}$ en fonction de $RE_{i_2}$ :

$$RE_{i_1} = -\frac{b_{11} + b_{13} \cdot RE_{i_2}}{b_{12} + b_{14} \cdot RE_{i_2}} \tag{13}$$

L'expression (13) introduite dans la seconde équation du système (9) aboutit à une équation du second degré en $RE_{i_2}$, résolue par le détecteur R :

$$A \cdot RE_{i_2}{}^2 + B \cdot RE_{i_2} + C = 0 \tag{14.1}$$

Où:

- $A = b_{13}.b_{24} - b_{14}.b_{23}$,
- $B = b_{11}.b_{24} - b_{12}.b_{23} + b_{13}.b_{22} - b_{14}.b_{21}$, et
- $C = b_{11}.b_{22} - b_{12}.b_{21}$.

La solution de l'équation (14.1) est l'unique racine positive, soit :

$$RE_{i_2} = \frac{-B \pm \sqrt{B^2 - 4AC}}{2A} > 0 \qquad\qquad (15)$$

La distance $RE_{i_1}$ de la première source au détecteur R est calculée par le détecteur R à partir de l'expression (13) et de la valeur de $RE_{i_2}$ précédemment trouvée.

Les relations (7.2) et (7.3) permettent de calculer les distances de chaque réflecteur au détecteur $RE_{n_1}$ et $RS_{n_2}$ à partir des valeurs mesurées de $\Delta_{E_i, S_{n_i}}$ et $\alpha_{E_i, S_n}$, et des valeurs calculées de $RE_{i_1}$ et $RE_{i_2}$.

Ainsi, les sources $E_{i_1}$ et $E_{i_2}$ et les réflecteurs $S_{n_1}$ et $S_{n_2}$ ont bien été localisés en coordonnées polaires, respectivement $\left(RE_{i_1}, \Theta_{k_{E_{i_1}}}\right)$, $\left(RE_{i_2}, \Theta_{k_{E_{i_2}}}\right)$, $\left(RS_{n_1}, \Theta_{k_{S_{n_1}}}\right)$ et $\left(RS_{n_2}, \Theta_{k_{S_{n_2}}}\right)$.

Le détecteur R de localisation de sources $E_i$ d'émission d'impulsions électromagnétiques, fonctionnant sur le principe décrit précédemment, est illustré de manière fonctionnelle par la figure 6.

Le détecteur R est un détecteur de radars.

Le détecteur R est quasi-statique par rapport aux sources $E_i$ à localiser, c'est-à-dire que le détecteur R a au plus une vitesse relativement faible par rapport aux sources $E_i$ à localiser, de sorte que les évolutions géométriques relatives aux triangles bistatiques $E_{i_1}RS_{n_1}$, $E_{i_2}RS_{n_2}$, $E_{i_1}RS_{n_2}$ et $E_{i_2}RS_{n_1}$ soient suffisamment inférieures à la précision recherchée pour ne pas l'affecter.

Le détecteur R comprend un module de réception 12 et un calculateur 14.

Le module de réception 12 comprend un réseau d'antennes de goniométrie formant un unique détecteur considéré comme ponctuel, un ensemble de chaînes de réception associées au réseau d'antennes et des fonctions de traitement permettant de mesurer des caractéristiques des impulsions reçues.

Les caractéristiques des impulsions mesurées par le module de réception 12 sont, par exemple, la direction d'arrivée des impulsions, la fréquence porteuse des impulsions, la largeur des impulsions, la date d'arrivée des impulsions, la modulation intra-impulsion intentionnelle (en anglais *intentional modulation on pulse*) ou encore la puissance des impulsions.

Le calculateur 14 est en interaction avec le module de réception 12.

Le calculateur 14 comprend, par exemple, un processeur, une mémoire et une unité de traitement de données. L'unité de traitement de données est configurée pour mettre en oeuvre en interaction avec un produit programme d'ordinateur, chargeable dans l'unité de traitement de données, un procédé de localisation qui sera décrit plus en détails dans la suite de la description.

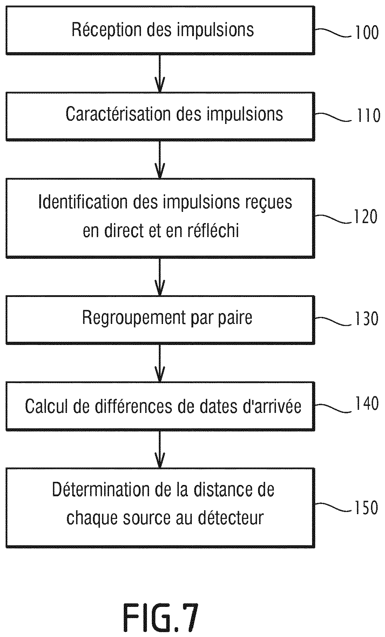

Un exemple de fonctionnement du détecteur R est maintenant décrit en référence à la figure 7, qui illustre schématiquement un ordinogramme de mise en oeuvre d'un procédé de localisation de sources $E_1,..., E_n$ d'émission d'impulsions électromagnétiques.

Dans la suite de la description, le terme « égal » désigne « égal à une tolérance près ». La tolérance choisie est liée aux précisions de mesure, au rapport signal-à-bruit de mesure et à la fréquence des signaux reçus sur le détecteur R. La tolérance choisie est, par exemple, $\pm$ 5 pourcents (%).

Pour chaque source $E_i$ à localiser, le procédé de détermination comprend initialement une étape 100 de réception par le détecteur R d'au moins une impulsion émise, d'une part reçue en direct, c'est-à-dire selon le trajet allant directement de la source $E_i$ au détecteur R, et d'autre part reçue sous sa forme réfléchie, c'est-à-dire après réflexion sur un réflecteur $S_n$. Seules la différence de trajets géométriques, qui entraîne des dates d'arrivée différentes, et la qualité de la réflexion permet de différencier l'impulsion reçue en direct de l'impulsion reçue en réfléchie lorsque ces impulsions reçues sont issues de la même émission.

Ensuite, le procédé de localisation comprend une étape 110 de mesure, par le détecteur R, de la direction d'arrivée $\theta$, de la date d'arrivée t sur le détecteur R, de la puissance p et d'au moins une caractéristique technique invariante CTI de chaque impulsion reçue.

Les caractéristiques invariantes CTI de chaque impulsion comprennent au moins l'une des caractéristiques parmi : la largeur de l'impulsion, la fréquence porteuse de l'impulsion et la modulation intra-impulsion intentionnelle.

Dans la suite de la description, une impulsion reçue et dont les caractéristiques ont été mesurées par le détecteur R est notée I(CTI, $\theta$, t, p).

Les étapes suivantes du procédé sont effectuées pour différentes périodes de temps T successives. La valeur de chaque période de temps T est, par exemple, de l'ordre d'au moins une période de rotation d'antenne des sources radar d'intérêt. Une telle valeur de période de temps T permet, en effet, que les sources radar d'intérêt aient illuminé les réflecteurs.

On note {I(CTI, θ, t, p)} l'ensemble des impulsions reçues par le détecteur R et dont les caractéristiques ont été mesurées par le détecteur R sur une période de temps donnée T. Dans chaque ensemble {I(CTI, θ, t, p)}, les impulsions en provenance d'une même source $E_i$ sont mélangées dans le temps avec les impulsions en provenance d'autres sources $E_i$.

Le procédé comprend une étape 120 d'identification, pour chaque ensemble{I(CTI, θ, t, p)}, des impulsions reçues en direct et des impulsions reçues en réflexion.

L'étape d'identification 120 comprend, pour chaque ensemble {I(CTI, θ, t, p)}, le regroupement dans des sous-ensembles des impulsions reçues de mêmes caractéristiques techniques invariantes CTI et de mêmes directions d'arrivée θ. De tels sous-ensembles sont dits cohérents en caractéristiques techniques invariantes CTI et en directions d'arrivée θ, et sont notés {I(CTI$_j$, Θ$_k$, t, p)}.

L'étape d'identification 120 comprend, ensuite, la détermination de la puissance maximale $P_{max}$(CTI$_j$, Θ$_k$) des impulsions de chaque sous-ensemble {I(CTI$_j$, Θ$_k$, t, p)} et du nombre d'impulsions NI(CTI$_j$, Θ$_k$) de chaque sous-ensemble {I(CTI$_j$, Θ$_k$, t, p)}.

Pour chaque sous-ensemble {I(CTI$_j$, Θ$_k$, t, p)}, lorsqu'une première condition est réalisée, alors le sous-ensemble {I(CTI$_j$, Θ$_k$, t, p)} comprend des impulsions reçues en direct.

La première condition stipule que la puissance maximale $P_{max}$(CTI$_j$, Θ$_k$) déterminée pour ledit sous-ensemble {I(CTI$_j$, Θ$_k$, t, p)} est supérieure ou égale à un premier seuil prédéterminé de puissance $P_1$. Le premier seuil prédéterminé de puissance $P_1$ est, par exemple, choisi en fonction de la puissance rayonnée des sources $E_i$. La puissance rayonnée d'une source (abrégée en PIRE) est le produit de la puissance injectée dans la ou les antennes de la source par le gain de la ou desdites antennes de la source.

La première condition stipule, en outre, que le nombre d'impulsions NI(CTI$_j$, Θ$_k$) déterminé pour ledit sous-ensemble {I(CTI$_j$, Θ$_k$, t, p)} est égal au nombre d'impulsions maximal parmi les nombres d'impulsions NI(CTI$_j$, Θ$_k$) des sous-ensembles {I(CTI$_j$, Θ$_k$, t, p)}$_k$ de mêmes caractéristiques techniques invariantes CTI$_j$ que ledit sous-ensemble {I(CTI$_j$, Θ$_k$, t, p)} quelle que soit la direction d'arrivée Θ$_k$ desdits sous-ensembles ({I(CTI$_j$, Θ$_k$, t, p)}$_k$).

Lorsque la première condition est réalisée, le sous-ensemble considéré est susceptible de contenir, outre des impulsions reçues en direct, des impulsions réfléchies, par exemple, émises en provenance de la source considérée et reçues après réflexion sur un ou plusieurs réflecteurs aligné et situé derrière la source considérée. Pour identifier de telles éventuelles impulsions réfléchies, l'étape d'identification 120 comprend les sous-étapes additionnelles suivantes dans le cas où la première condition est réalisée.

Dans le cas où la première condition est réalisée, l'étape d'identification 120 comprend, l'établissement d'une première distribution statistique des écarts entre les dates d'arrivée successives des impulsions dudit sous-ensemble ayant une puissance supérieure ou égale à la moitié de la puissance maximale, c'est-à-dire des impulsions du sous-ensemble réduit $\left\{ I\left( CTI_j, \Theta_k, t, p \geq \frac{P_{max}(CTI_j, \Theta_k)}{2} \right) \right\}$. Une telle distribution statistique est, par exemple, un histogramme des écarts entre les dates d'arrivée successives des impulsions dudit sous-ensemble réduit $\left\{ I\left( CTI_j, \Theta_k, t, p \geq \frac{P_{max}(CTI_j, \Theta_k)}{2} \right) \right\}$.

Dans le cas où la première condition est réalisée, l'étape d'identification 120 comprend, également, l'établissement d'une deuxième distribution statistique des écarts entre les dates d'arrivée successives des impulsions dudit sous-ensemble {I(CTI$_j$, Θ$_k$, t, p)} Une telle distribution statistique est, par exemple, un histogramme des écarts entre dates d'arrivée successives des impulsions du sous-ensemble {I(CTI$_j$, Θ$_k$, t, p)}.

Lorsque la deuxième distribution statistique est identique à la première distribution statistique, alors les impulsions dudit sous-ensemble {I(CTI$_j$, Θ$_k$, t, p)} sont identifiées reçues en direct et le sous-ensemble est un sous-ensemble direct {I(CTI$_j$, Θ$_k$, t, p)}$_E$.

Lorsque la deuxième distribution statistique comprend des écarts différents des écarts de la première distribution statistique et inférieurs ou égaux à un troisième seuil prédéterminé $\tau_s$, alors les impulsions dont sont issus lesdits écarts différents sont identifiées reçues en réfléchi et forment un sous-ensemble réfléchi {I(CTI$_j$, Θ$_{kS}$, t, p))}$_S$. Le troisième seuil prédéterminé $\tau_s$ est, de préférence, choisi inférieur ou égal à 200 microsecondes, avantageusement inférieur ou égal 100 microsecondes ($\mu$s).

Les impulsions restantes dudit sous-ensemble {I(CTI$_j$, Θ$_k$, t, p)} sont identifiées reçues en direct et forment un sous-ensemble direct {I(CTI$_j$, Θ$_{kE}$, t, p)}$_E$.

Ainsi, lorsque la première condition est réalisée pour un sous-ensemble {I(CTI$_j$, Θ$_k$, t, p)}, les sous-étapes additionnelles de l'étape d'identification 120 permettent de déterminer les éventuelles impulsions réfléchies du sous-ensemble {I(CTI$_j$, Θ$_k$, t, p)}. De telles sous-étapes additionnelles reposent sur l'hypothèse que le sous-ensemble réduit au sous-ensemble d'impulsions de puissance supérieure ou égale à la moitié de la puissance maximale ne contient a priori que des impulsions reçues en direct. De ce fait, la distribution statistique des écarts entre dates d'arrivée successives contenues dans un tel sous-ensemble réduit fait ressortir la ou les périodes de répétition des impulsions (abrégé en PRI). Lorsque le sous-ensemble non réduit considéré comprend des impulsions reçues en réfléchi, de telles impulsions reçues en réfléchi sont a priori de retard faible par rapport à la ou les périodes de répétition des impulsions attendues. Dès lors, les première et deuxième distributions statistiques permettent d'extraire de telles impulsions reçues en réfléchi du sous-ensemble considéré.

Pour chaque sous-ensemble $\{I(CTI_j, \Theta_k, t, p)\}$, lorsqu'une deuxième condition est réalisée, alors les impulsions dudit sous-ensemble $\{I(CTI_j, \Theta_k, t, p)\}$ sont identifiées reçues en réfléchi et le sous-ensemble est un sous-ensemble réfléchi $\{I(CTI_j, \Theta_{kS}, t, p)\}_S$.

La deuxième condition stipule que la puissance maximale $P_{max}(CTI_j, \Theta_k)$ déterminée pour ledit sous-ensemble $\{I(CTI_j, \Theta_k, t, p)\}$ est strictement inférieure à un deuxième seuil prédéterminé de puissance $P_2$. Le deuxième seuil prédéterminé de puissance $P_2$ est inférieur ou égal au premier seuil prédéterminé de puissance $P_1$. Le deuxième seuil prédéterminé de puissance $P_2$ est, par exemple, choisi en fonction de la puissance rayonnée des sources $E_i$ et des surfaces équivalentes radars des réflecteur $S_n$.

La deuxième condition stipule, en outre, que le nombre d'impulsions $(NI(CTI_j, \Theta_k))$ déterminé pour ledit sous-ensemble $\{I(CTI_j, \Theta_k, t, p)\}$ est strictement inférieur au nombre d'impulsions maximal parmi les nombres d'impulsions $NI(CTI_j, \Theta_k)$ des sous-ensembles $\{I(CTI_j, \Theta_k, t, p)\}_k$ de mêmes caractéristiques techniques invariantes $CTI_j$ que ledit sous-ensemble $\{I(CTI_j, \Theta_k, t, p)\}$ quelle que soit la direction d'arrivée $\Theta_k$ desdits sous-ensembles $(\{I(CTI_j, \Theta_k, t, p)\}_k)$.

Le procédé de localisation comprend une étape 130 de regroupement par paire de sous-ensembles directs $\{I(CTI_j, \Theta_{kE}, t, p)\}_E$ avec des sous-ensembles réfléchis $\{I(CTI_j, \Theta_k, t, p)\}_S$, les impulsions des sous-ensembles de chaque paire ayant les mêmes caractéristiques techniques invariantes CTI. Les impulsions du sous-ensemble réfléchi $\{I(CTI_j, \Theta_k, t, p)\}_S$ de la paire ont une direction d'arrivée $\theta$ différente ou identique, dans le cas de réflecteurs alignés avec la source et le détecteur, de celles du sous-ensemble direct $\{I(CTI_j, \Theta_{kE}, t, p)\}_E$ de la paire.

Le procédé de localisation comprend, également, une étape 140 de calcul, pour chaque paire, des différences $\tau$ de dates d'arrivée entre les impulsions du sous-ensemble réfléchi $\{I(CTI_j, \Theta_{kS}, t, p)\}_S$ et les impulsions du sous-ensemble direct $\{I(CTI_j, \Theta_{kE}, t, p)\}_E$ de la paire.

L'étape de calcul 140 comprend, de préférence, pour chaque paire, l'élimination des différences $\tau$ de date d'arrivée strictement supérieures à un quatrième seuil prédéterminé et dont le nombre d'occurrences est supérieur ou égal à un cinquième seuil prédéterminé. Le quatrième seuil prédéterminé est, avantageusement, égal au troisième seuil prédéterminé $\tau_S$. Une telle élimination est, par exemple, effectuée à partir d'une distribution statistique sous forme d'histogramme des différences $\tau$ de date d'arrivée calculées pour chaque paire.

Le procédé de localisation comprend, en outre, une étape 150 de détermination de la distance de chaque source au détecteur R à partir des différences $\tau$ de dates d'arrivée calculées et des directions d'arrivée $\theta$ des impulsions de chaque paire.

Pour cela, l'étape de détermination 150 comprend, pour chaque sous-ensemble direct $\{I(CTI_j, \Theta_{kE}, t, p))_E$, l'établissement d'une cartographie représentant l'ensemble des différences $\tau$ de date d'arrivée calculées à partir des impulsions dudit sous-ensemble direct $\{I(CTI_j, \Theta_{kE}, t, p))_E$, en fonction des directions d'arrivée $\theta$ des impulsions réfléchies correspondant auxdites différences $\tau$ de date d'arrivée calculées.

Chaque cartographie représente, ainsi, l'ensemble des impulsions reçues après réflexion sur des réflecteurs de l'environnement et en provenance d'une même source à localiser.

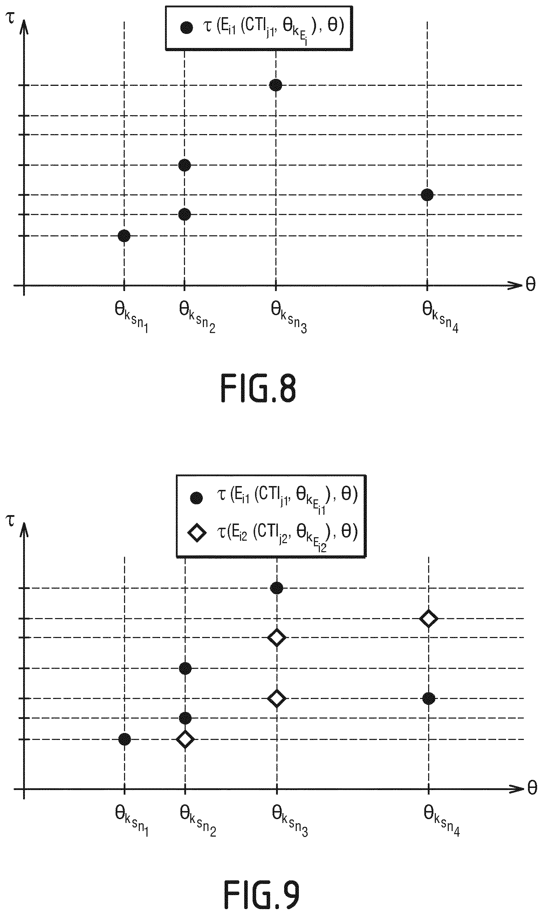

Un exemple de cartographie obtenue pour un sous-ensemble direct $\left\{I\left(CTI_{j1}, \Theta_{k_{E_i}}, t, p\right)\right\}_E$ de caractéristique technique invariante $CTI_{j1}$ et de direction d'arrivée $\Theta_{k_{E_i}}$ est représenté par la figure 8. Comme illustré sur cette cartographie, les impulsions réfléchies correspondant aux différences $\tau$ de dates d'arrivée de la cartographie sont dans l'une des directions d'arrivée $\theta_{k_{S_{n_1}}}$, $\theta_{k_{S_{n_2}}}$, $\theta_{k_{S_{n_3}}}$ ou $\theta_{k_{S_{n_4}}}$.

L'étape de détermination 150 comprend, ensuite, pour chaque couple formé de deux sous-ensembles directs $\{I(CTI_j, \Theta_{kE}, t, p)\}_E$ dont les impulsions ont des directions d'arrivée différentes, l'identification à partir des cartographies établies pour lesdits sous-ensembles directs $\{I(CTI_j, \Theta_{kE}, t, p)\}_E$, d'une ou plusieurs configurations géométriques.

Chaque configuration géométrique est choisie parmi l'une des première, deuxième et troisième configurations décrites dans ce qui suit.

La première configuration correspond à la configuration de la figure 2. Dans la première configuration ledit couple de sous-ensembles directs $\{I(CTI_j, \Theta_{kE}, t, p)\}_E$ correspond à deux sources à localiser, les impulsions émises par lesdites sources se réfléchissant sur deux réflecteurs. L'un des réflecteurs est confondu avec l'une desdites sources et l'autre réflecteur est confondu avec l'autre desdites sources. La première configuration est associée à :

- un premier retard $\tau_{m_1}\left(E_{i_1}\left(CTI_{j_1}, \Theta_{k_{E_{i_1}}}\right), \Theta_{k_{S_{n_2}}} = \Theta_{k_{E_{i_2}}}\right)$ relatif à la réflexion des impulsions émises par une première desdites sources sur le réflecteur confondu avec l'autre source, et

- un deuxième retard $\tau_{m_2}\left(E_{i_2}\left(CTI_{j_2}, \Theta_{k_{E_{i_2}}}\right), \Theta_{k_{S_{n_1}}} = \Theta_{k_{E_{i_1}}}\right)$ relatif à la réflexion des impulsions émises par une deuxième desdites sources sur le réflecteur confondu avec l'autre source.

La deuxième configuration correspond à l'une des configurations de la figure 3 ou 4. Dans la deuxième configuration ledit couple de sous-ensembles directs $\{I(CTI_j, \Theta_{k_E}, t, p)\}_E$ correspond à deux sources à localiser, les impulsions émises par lesdites sources se réfléchissant sur deux réflecteurs. L'un des réflecteurs est distinct desdites sources et l'un des réflecteurs est confondu avec l'une desdites sources. La deuxième configuration est associée à :

- un premier retard $\tau_{m_1}\left(E_{i_1}\left(CTI_{j_1}, \Theta_{k_{E_{i_1}}}\right), \Theta_{k_{S_{n_2}}} = \Theta_{k_{E_{i_2}}}\right)$ relatif à la réflexion des impulsions émises par une première desdites sources sur le réflecteur confondu avec l'autre source,

- un deuxième retard $\tau_{m_2}\left(E_{i_1}\left(CTI_{j_1}, \Theta_{k_{E_{i_1}}}\right), \Theta_{k_{S_{n_1}}} \neq \Theta_{k_{E_{i_1}}} \text{ et } \Theta_{k_{S_{n_1}}} \neq \Theta_{k_{E_{i_2}}}\right)$ relatif à la réflexion des impulsions émises par la première desdites sources sur le réflecteur distinct, et

- un troisième retard $\tau_{m_3}\left(E_{i_2}\left(CTI_{j_2}, \Theta_{k_{E_{i_2}}}\right), \Theta_{k_{S_{n_1}}} \neq \Theta_{k_{E_{i_1}}} \text{ et } \Theta_{k_{S_{n_1}}} \neq \Theta_{k_{E_{i_2}}}\right)$ relatif à la réflexion des impulsions émises par une deuxième desdites sources sur le réflecteur distinct.

La troisième configuration correspond à la configuration de la figure 5. Dans la troisième configuration ledit couple de sous-ensembles directs $\{I(CTI_j, \Theta_{k_E}, t, p)\}_E$ correspond à deux sources à localiser, les impulsions émises par lesdites sources se réfléchissant sur deux réflecteurs distincts desdites sources. La troisième configuration est associée à :

- un premier retard $\tau_{m_1}\left(E_{i_1}\left(CTI_{j_1}, \Theta_{k_{E_{i_1}}}\right), \Theta_{k_{S_{n_1}}} \neq \Theta_{k_{E_{i_1}}} \text{ et } \Theta_{k_{S_{n_1}}} \neq \Theta_{k_{E_{i_2}}} \text{ et } \Theta_{k_{S_{n_1}}} \neq \Theta_{k_{S_{n_2}}}\right)$ relatif à la réflexion des impulsions émises par une première desdites sources sur un premier desdits réflecteurs,

- un deuxième retard $\tau_{m_2}\left(E_{i_2}\left(CTI_{j_2}, \Theta_{k_{E_{i_2}}}\right), \Theta_{k_{S_{n_1}}} \neq \Theta_{k_{E_{i_1}}} \text{ et } \Theta_{k_{S_{n_1}}} \neq \Theta_{k_{E_{i_2}}} \text{ et } \Theta_{k_{S_{n_1}}} \neq \Theta_{k_{S_{n_2}}}\right)$ relatif à la réflexion des impulsions émises par une deuxième desdites sources sur le premier desdits réflecteurs, et

- un troisième retard $\tau_{m_3}\left(E_{i_1}\left(CTI_{j_1}, \Theta_{k_{E_{i_1}}}\right), \Theta_{k_{S_{n_2}}} \neq \Theta_{k_{E_{i_1}}} \text{ et } \Theta_{k_{S_{n_2}}} \neq \Theta_{k_{E_{i_2}}} \text{ et } \Theta_{k_{S_{n_2}}} \neq \Theta_{k_{S_{n_1}}}\right)$ relatif à la réflexion des impulsions émises par la première desdites sources sur un deuxième desdits réflecteurs,

- un quatrième retard $\tau_{m_4}\left(E_{i_2}\left(CTI_{j_2}, \Theta_{k_{E_{i_2}}}\right), \Theta_{k_{S_{n_2}}} \neq \Theta_{k_{E_{i_1}}} \text{ et } \Theta_{k_{S_{n_2}}} \neq \Theta_{k_{E_{i_2}}} \text{ et } \Theta_{k_{S_{n_2}}} \neq \Theta_{k_{S_{n_1}}}\right)$ relatif à la réflexion des impulsions émises par la deuxième desdites sources sur le deuxième desdits réflecteurs.

L'identification des configurations géométriques pour chaque couple formé de deux sous-ensembles direct $\{I(CTI_j, \Theta_{k_E}, t, p)\}_E$ est, par exemple, obtenue par superposition des cartographies obtenues pour lesdits sous-ensembles direct $\{I(CTI_j, \Theta_{k_E}, t, p)\}_E$. Une telle superposition de deux cartographies est, par exemple, illustré par la figure 9 où les données de la cartographie d'une première source $E_{i_1}$ sont représentées par des ronds et les données de la cartographie d'une deuxième source $E_{i_2}$ sont représentées par des losanges.

L'étape de détermination 150 comprend, ensuite, le calcul de la distance $RE_i$ de chaque source $E_i$ au détecteur R à partir des expressions (15) et (13) décrites précédemment. L'étape de détermination 150 comprend, en outre, le calcul de la distance $RS_n$ de chaque réflecteur $S_n$ au détecteur R à partir des expressions (7.2) et (7.3) décrites précédemment.

Les grandeurs intermédiaires sont calculées à partir des expressions (1), (2) et (3) décrites précédemment.

Pour la première configuration illustrée en figure 2, les deux retards sont :

$$\tau_{E_{i_1}, S_{n_2}} = \tau_{m_1}\left(E_{i_1}\left(CTI_{j_1}, \Theta_{k_{E_{i_1}}}\right), \Theta_{k_{S_{n_2}}} = \Theta_{k_{E_{i_2}}}\right) \qquad (16)$$

$$\tau_{E_{i_2}, S_{n_1}} = \tau_{m_2}\left(E_{i_2}\left(CTI_{j_2}, \Theta_{k_{E_{i_2}}}\right), \Theta_{k_{S_{n_1}}} = \Theta_{k_{E_{i_1}}}\right) \qquad (17)$$

et les coefficients $b_{pq}$ permettant de résoudre les expressions (15) et (13) sont donnés par les expressions (12.1) et (12.2) décrites précédemment.

Pour la deuxième configuration illustrée en figure 3, les trois retards sont :

$$\tau_{E_{i_1},S_{n_2}} = \tau_{m_1}\left(E_{i_1}\left(CTI_{j_1}, \Theta_{k_{E_{i_1}}}\right), \Theta_{k_{S_{n_2}}} = \Theta_{k_{E_{i_2}}}\right) \qquad (18)$$

$$\tau_{E_{i_1},S_{n_1}} = \tau_{m_2}\left(E_{i_1}\left(CTI_{j_1}, \Theta_{k_{E_{i_1}}}\right), \Theta_{k_{S_{n_1}}} \neq \Theta_{k_{E_{i_1}}} \text{ et } \Theta_{k_{S_{n_1}}} \neq \Theta_{k_{E_{i_2}}}\right) \qquad (19)$$

$$\tau_{E_{i_2},S_{n_1}} = \tau_{m_3}\left(E_{i_2}\left(CTI_{j_2}, \Theta_{k_{E_{i_2}}}\right), \Theta_{k_{S_{n_1}}} \neq \Theta_{k_{E_{i_1}}} \text{ et } \Theta_{k_{S_{n_1}}} \neq \Theta_{k_{E_{i_2}}}\right) \qquad (20)$$

et les coefficients $b_{pq}$ permettant de résoudre les expressions (15) et (13) sont donnés par les expressions (12.3) et (12.2) décrites précédemment.

Pour la deuxième configuration illustrée en figure 4, les trois retards sont :

$$\tau_{E_{i_1},S_{n_2}} = \tau_{m_1}\left(E_{i_1}\left(CTI_{j_1}, \Theta_{k_{E_{i_1}}}\right), \Theta_{k_{S_{n_2}}} \neq \Theta_{k_{E_{i_1}}} \text{ et } \Theta_{k_{S_{n_2}}} \neq \Theta_{k_{E_{i_2}}}\right) \qquad (21)$$

$$\tau_{E_{i_2},S_{n_2}} = \tau_{m_2}\left(E_{i_2}\left(CTI_{j_2}, \Theta_{k_{E_{i_2}}}\right), \Theta_{k_{S_{n_2}}} \neq \Theta_{k_{E_{i_1}}} \text{ et } \Theta_{k_{S_{n_2}}} \neq \Theta_{k_{E_{i_2}}}\right) \qquad (22)$$

$$\tau_{E_{i_2},S_{n_1}} = \tau_{m_3}\left(E_{i_2}\left(CTI_{j_2}, \Theta_{k_{E_{i_2}}}\right), \Theta_{k_{S_{n_1}}} = \Theta_{k_{E_{i_1}}}\right) \qquad (23)$$

et les coefficients $b_{pq}$ permettant de résoudre les expressions (15) et (13) sont donnés par les expressions (12.1) et (12.4) décrites précédemment.

Pour la troisième configuration illustrée en figure 5, les quatre retards sont :

$$\tau_{E_{i_1},S_{n_1}} = \tau_{m_1}\left(E_{i_1}\left(CTI_{j_1}, \Theta_{k_{E_{i_1}}}\right), \Theta_{k_{S_{n_1}}} \neq \Theta_{k_{E_{i_1}}} \text{ et } \Theta_{k_{S_{n_1}}} \neq \Theta_{k_{E_{i_2}}} \text{ et } \Theta_{k_{S_{n_1}}} \neq \Theta_{k_{S_{n_2}}}\right) \quad (24)$$

$$\tau_{E_{i_2},S_{n_1}} = \tau_{m_2}\left(E_{i_2}\left(CTI_{j_2}, \Theta_{k_{E_{i_2}}}\right), \Theta_{k_{S_{n_1}}} \neq \Theta_{k_{E_{i_1}}} \text{ et } \Theta_{k_{S_{n_1}}} \neq \Theta_{k_{E_{i_2}}} \text{ et } \Theta_{k_{S_{n_1}}} \neq \Theta_{k_{S_{n_2}}}\right) \quad (25)$$

$$\tau_{E_{i_1},S_{n_2}} = \tau_{m_3}\left(E_{i_1}\left(CTI_{j_1}, \Theta_{k_{E_{i_1}}}\right), \Theta_{k_{S_{n_2}}} \neq \Theta_{k_{E_{i_1}}} \text{ et } \Theta_{k_{S_{n_2}}} \neq \Theta_{k_{E_{i_2}}} \text{ et } \Theta_{k_{S_{n_2}}} \neq \Theta_{k_{S_{n_1}}}\right) \quad (26)$$

$$\tau_{E_{i_2},S_{n_2}} = \tau_{m_4}\left(E_{i_2}\left(CTI_{j_2}, \Theta_{k_{E_{i_2}}}\right), \Theta_{k_{S_{n_2}}} \neq \Theta_{k_{E_{i_1}}} \text{ et } \Theta_{k_{S_{n_2}}} \neq \Theta_{k_{E_{i_2}}} \text{ et } \Theta_{k_{S_{n_2}}} \neq \Theta_{k_{S_{n_1}}}\right) \quad (27)$$

et les coefficients $b_{pq}$ permettant de résoudre les expressions (15) et (13) sont donnés par les expressions (12.3) et (12.4) décrites précédemment.

Ainsi pour chaque configuration donnée, il est obtenu quatre distances $RE_{i_1}$, $RE_{i_2}$, $RS_{n_1}$ et $RS_{n_2}$, respectivement associées aux directions d'arrivée $\Theta_{k_{E_{i_1}}}$, $\Theta_{k_{E_{i_2}}}$, $\Theta_{k_{S_{n_1}}}$ et $\Theta_{k_{S_{n_2}}}$.

Parmi toutes les configurations envisagées, certaines ne correspondent pas à la réalité. De telles combinaisons ont une probabilité importante de donner des résultats aberrants. De ce fait, l'étape de détermination 150 comprend, de préférence, l'élimination des valeurs de distances $RE_{i_1}$, $RE_{i_2}$, $RS_{n_1}$ et $RS_{n_2}$ non plausibles. Une distance est dite plausible si elle est comprise dans un intervalle de distances plausibles. Les distances de chaque intervalle de distances plausibles sont strictement positives. Il est, par exemple, défini un intervalle de distances plausibles pour les sources: $[RE_{min}, RE_{max}]$ et un intervalle de distances plausibles différents pour les réflecteurs : $[RS_{min}, RS_{max}]$,

En variante, il est défini des intervalles de distances plausibles spécifiques à chaque source et à chaque direction de réflexion.

Dans la mesure où il existe au moins un couple de sous-ensembles directs associé à au moins une configuration, chaque configuration permettant d'obtenir quatre distances $RE_{i_1}$, $RE_{i_2}$, $RS_{n_1}$ et $RS_{n_2}$ cela implique que plusieurs solutions sont susceptibles d'être obtenues pour une même distance. De ce fait, l'étape de détermination 150 comprend, également, le choix de la distance la plus occurrente parmi la ou les valeurs de distance obtenues pour chaque source. Un tel choix est, par exemple, effectué à partir d'une distribution statistique, telle qu'un histogramme, de l'ensemble des valeurs de distance obtenues.

Pour les réflecteurs, compte tenu que plusieurs réflecteurs sont susceptibles de se trouver dans une même direction, le choix de la distance la plus occurrente parmi l'ensemble des valeurs de distance obtenues n'est, de préférence, pas effectué. Aussi, l'étape de détermination 150 comprend, de préférence, l'établissement de la distribution statistique, par exemple sous forme d'histogramme, de l'ensemble des valeurs de distance obtenues. Pour intégrer les erreurs angulaires, un tel histogramme est, par exemple, un histogramme à deux dimensions distance-direction d'arrivée, présentant ainsi une cartographie des réflecteurs.

Le procédé décrit permet donc la localisation de sources $E_i$ à partir d'un unique détecteur quasi-statique par rapport aux sources à localiser. Un tel procédé permet également la localisation des réflecteurs $S_n$ situés dans l'environnement des sources $E_i$ à localiser.

Plus précisément, un tel procédé permet de localiser deux sources dans un environnement comprenant au moins lesdites sources et deux réflecteurs quelle que soit la configuration des sources et des réflecteurs sous l'hypothèse que les réflecteurs ne sont pas colocalisés entre eux et que les sources ne sont pas colocalisées entre elles, ni alignées avec le détecteur.

Le procédé propose de résoudre un seul système d'équations pour l'ensemble des configurations possibles avec des coefficients spécifiques à chacune desdites configurations.

La localisation des sources est basée uniquement sur des mesures de directions d'arrivée et de dates d'arrivée des impulsions radar provenant directement des émetteurs et indirectement de ceux-ci via des réflexions sur les objets matériels réflecteurs de l'environnement.

Les étapes d'identification 120, de regroupement 130, de calcul 140 et de détermination 150 permettent d'envisager toutes les configurations possibles de sources et de réflecteurs, ce qui permet d'améliorer la précision de la localisation des sources $E_i$.

**Revendications**

1. Procédé de localisation d'au moins deux sources ($E_i$) d'émission d'impulsions électromagnétiques dans un environnement, l'environnement comprenant au moins deux réflecteurs ($S_n$), le procédé comprenant les étapes de :

    - réception, par un détecteur (R), pour chaque source ($E_i$) à localiser, d'au moins une même impulsion émise, reçue d'une part en direct de ladite source ($E_i$) et reçue d'autre part par réflexion sur l'un des réflecteurs ($S_n$),
    - mesure de la direction d'arrivée ($\theta$), de la date d'arrivée (t), de la puissance (p) et d'au moins une caractéristique technique invariante (CTI) de chaque impulsion reçue,
    - identification de sous-ensembles directs ($\{I(CTI_j, \Theta_{k_E}, t, p)\}_E$) et de sous-ensembles réfléchis ($\{I(CTI_j, \Theta_{k_S}, t, p)\}_S$), chaque sous-ensemble direct ($\{I(CTI_j, \Theta_{k_E}, t, p)\}_E$) comprenant des impulsions reçues en direct d'une même source ($E_i$) à localiser, chaque sous-ensemble réfléchi ($\{I(CTI_j, \Theta_{k_S}, t, p)\}_S$) comprenant des impulsions émises par une même source ($E_i$) à localiser et reçues après réflexion sur un même réflecteur ($S_n$),
    - regroupement par paire de sous-ensembles directs ($\{I(CTI_j, \Theta_{k_E}, t, p)\}_E$) avec des sous-ensembles réfléchis ($\{I(CTI_j, \Theta_{k_S}, t, p)\}_S$), les impulsions des sous-ensembles de chaque paire ayant les mêmes caractéristiques techniques invariantes (CTI),
    - calcul, pour chaque paire, des différences ($\tau$) de dates d'arrivée entre les impulsions du sous-ensemble réfléchi ($\{I(CTI_j, \Theta_{k_S}, t, p)\}_S$) et les impulsions du sous-ensemble direct ($\{I(CTI_j, \Theta_{k_E}, t, p)\}_E$) de la paire,
    - détermination de la distance ($RE_i$) de chaque source ($E_i$) au détecteur (R) à partir des différences ($\tau$) de dates d'arrivée calculées et des directions d'arrivée ($\theta$) des impulsions de chaque paire,

    **caractérisé en ce que** l'étape d'identification comprend :

- le regroupement dans des sous-ensembles ($\{I(CTI_j, \Theta_k, t, p)\}$) des impulsions reçues de mêmes caractéristiques techniques invariantes (CTI) et de mêmes directions d'arrivée ($\theta$),
- la détermination de la puissance maximale ($P_{max}(CTI_j, \Theta_k)$) des impulsions de chaque sous-ensemble ($\{I(CTI_j, \Theta_k, t, p)\}$) et du nombre d'impulsions ($NI(CTI_j, \Theta_k)$) de chaque sous-ensemble ($\{I(CTI_j, \Theta_k, t, p)\}$),
- pour chaque sous-ensemble ($\{I(CTI_j, \Theta_k, t, p)\}$), lorsqu'une première condition est réalisée, alors le sous-ensemble ($\{I(CTI_j, \Theta_k, t, p)\}$) comprend des impulsions reçues en direct, la première condition stipulant que la puissance maximale ($P_{max}(CTI_j, \Theta_k)$) déterminée pour ledit sous-ensemble ($\{I(CTI_j, \Theta_k, t, p)\}$) est supérieure ou égale à un premier seuil prédéterminé de puissance ($P_1$) et que le nombre d'impulsions ($NI(CTI_j, \Theta_k)$) déterminé pour ledit sous-ensemble ($\{I(CTI_j, \Theta_k, t, p)\}$) est égal au nombre d'impulsions maximal parmi les nombres d'impulsions ($NI(CTI_j, \Theta_k)$) des sous-ensembles ($\{I(CTI_j, \Theta_k, t, p)\}_k$) de mêmes caractéristiques techniques invariantes ($CTI_j$) que ledit sous-ensemble ($\{I(CTI_j, \Theta k, t, p)\}$) quelle que soit la direction d'arrivée ($\Theta_k$) desdits sous-ensembles ($\{I(CTI_j, \Theta_k, t, p)\}_k$),
- pour chaque sous-ensemble ($\{I(CTI_j, \Theta_k, t, p)\}$) lorsqu'une deuxième condition est réalisée, alors les impulsions dudit sous-ensemble ($\{I(CTI_j, \Theta_k, t, p)\}$) sont identifiées reçues en réfléchi et le sous-ensemble est un sous-ensemble réfléchi ($\{I(CTI_j, \Theta_{k_S}, t, p)\}_S$), la deuxième condition stipulant que la puissance maximale déterminée pour ledit sous-ensemble ($\{I(CTI_j, \Theta_k, t, p)\}$) est strictement inférieure à un deuxième seuil prédéterminé de puissance ($P_2$) et que le nombre d'impulsions ($NI(CTI_j, \Theta_k)$) déterminé pour ledit sous-ensemble ($\{I(CTI_j, \Theta_k, t, p)\}$) est strictement inférieur au nombre d'impulsions maximal parmi les nombres d'impulsions ($NI(CTI_j, \Theta_k)$) des sous-ensembles ($\{I(CTI_j, \Theta_k, t, p)\}_k$) de mêmes caractéristiques techniques invariantes ($CTI_j$) que ledit sous-ensemble ($\{I(CTI_j, \Theta_k, t, p)\}$) quelle que soit la direction d'arrivée ($\Theta_k$) desdits sous-ensembles ($\{I(CTI_j, \Theta_k, t, p)\}_k$).

**2.** Procédé selon la revendication 1, dans lequel, pour chaque sous-ensemble ($\{I(CTI_j, \Theta_k, t, p)\}$), lorsque la première condition est réalisée, l'étape d'identification comprend, en outre :

- l'établissement d'une première distribution statistique des écarts entre les dates d'arrivée successives des impulsions dudit sous-ensemble ($\{I(CTI_j, \Theta_k, t, p)\}$), ayant une puissance supérieure ou égale à la moitié de la puissance maximale ($P_{max}(CTI_j, \Theta_k)$),
- l'établissement d'une deuxième distribution statistique des écarts entre les dates d'arrivée successives des impulsions dudit sous-ensemble ($\{I(CTI_j, \Theta_k, t, p)\}$),
- lorsque la deuxième distribution statistique est identique à la première distribution statistique, alors les impulsions dudit sous-ensemble ($\{I(CTI_j, \Theta_k, t, p)\}$) sont identifiées reçues en direct et le sous-ensemble est un sous-ensemble direct ($\{I(CTI_j, \Theta_{k_E}, t, p)\}_E$),
- lorsque la deuxième distribution statistique comprend des écarts différents des écarts de la première distribution statistique et inférieurs ou égaux à un troisième seuil prédéterminé ($\tau_S$), alors les impulsions dont sont issus lesdits écarts différents sont identifiées reçues en réfléchi et forment un sous-ensemble réfléchi ($\{I(CTI_j, \Theta_{k_S}, t, p)\}_S$) et les impulsions restantes dudit sous-ensemble ($\{I(CTI_j, \Theta_k, t, p)\}$) sont identifiées reçues en direct et forment un sous-ensemble direct ($\{I(CTI_j, \Theta_{kE}, t, p)\}_E$).

**3.** Procédé selon la revendication 1 ou 2, dans lequel l'étape de détermination comprend, pour chaque sous-ensemble direct ($\{I(CTI_j, \Theta_{kE}, t, p)\}_E$), l'établissement d'une cartographie représentant l'ensemble des différences ($\tau$) de date d'arrivée calculées à partir des impulsions dudit sous-ensemble direct ($\{I(CTI_j, \Theta_{kE}, t, p)\}_E$), en fonction des directions d'arrivée ($\theta$) des impulsions réfléchies correspondant auxdites différences de date d'arrivée ($\tau$) calculées, la distance ($RE_i$) de chaque source ($E_i$) au détecteur ($R$) étant déterminée en fonction des cartographies établies pour chaque sous-ensemble direct ($\{I(CTI_j, \Theta_{kE}, t, p)\}_E$).

**4.** Procédé selon la revendication 3, dans lequel pour chaque couple formé de deux sous-ensembles directs ($\{I(CTI_j, \Theta_{kE}, t, p)\}_E$) dont les impulsions ont des directions d'arrivée ($\theta$) différentes et des caractéristiques techniques invariantes ($CTI_j$) différentes, l'étape de détermination comprend, en outre, l'identification à partir des cartographies établies pour lesdits sous-ensembles directs ($\{I(CTI_j, \Theta_{kE}, t, p)\}_E$), d'une ou plusieurs configurations géométriques, chaque configuration géométrique étant choisie parmi les configurations suivantes :

- une première configuration dans laquelle ledit couple de sous-ensembles directs ($\{I(CTI_j, \Theta_{kE}, t, p)\}_E$) correspond à deux sources ($E_i$) à localiser, les impulsions émises par lesdites sources ($E_i$) se réfléchissant sur deux réflecteurs ($S_n$), l'un des réflecteurs ($S_n$) étant confondu avec l'une desdites sources ($E_i$) et l'autre réflecteur ($S_n$) étant confondu avec l'autre desdites sources ($E_i$), la première configuration étant associée à : un premier retard relatif à la réflexion des impulsions émises par une première desdites sources ($E_i$) sur le réflecteur ($S_n$) confondu avec l'autre source ($E_i$) et un deuxième retard relatif à la réflexion des impulsions émises par une deuxième desdites sources ($E_i$) sur le réflecteur ($S_n$) confondu avec l'autre source ($E_i$),

- une deuxième configuration dans laquelle ledit couple de sous-ensembles directs ($\{I(CTI_j, \Theta_{kE}, t, p)\}_E$) correspond à deux sources ($E_i$) à localiser, les impulsions émises par lesdites sources ($E_i$) se réfléchissant sur deux réflecteurs ($S_n$), l'un des réflecteurs ($S_n$) étant distinct desdites sources ($E_i$) et l'autre des réflecteurs ($S_n$) étant confondu avec l'une desdites sources ($E_i$), la deuxième configuration étant associée à : un premier retard relatif à la réflexion des impulsions émises par une première desdites sources ($E_i$) sur le réflecteur ($S_n$) confondu avec l'autre source ($E_i$), un deuxième retard relatif à la réflexion des impulsions émises par la première desdites sources ($E_i$) sur le réflecteur distinct ($S_n$), et un troisième retard relatif à la réflexion des impulsions émises par une deuxième desdites sources ($E_i$) sur le réflecteur distinct ($S_n$),

- une troisième configuration dans laquelle ledit couple de sous-ensembles directs ($\{I(CTI_j, \Theta_{kE}, t, p)\}_E$) correspond à deux sources ($E_i$) à localiser, les impulsions émises par lesdites sources ($E_i$) se réfléchissant sur deux réflecteurs ($S_n$) distincts desdites sources ($E_i$), la troisième configuration étant associée à : un premier retard relatif à la réflexion des impulsions émises par une première desdites sources ($E_i$) sur un premier desdits réflecteurs ($S_n$), un deuxième retard relatif à la réflexion des impulsions émises par une deuxième desdites sources ($E_i$) sur le premier desdits réflecteurs ($S_n$), un troisième retard relatif à la réflexion des impulsions émises par la première desdites sources ($E_i$) sur un deuxième desdits réflecteurs ($S_n$), et un quatrième retard relatif à la réflexion des impulsions émises par la deuxième desdites sources ($E_i$) sur le deuxième desdits réflecteurs ($S_n$),

la distance ($RE_i$) de chaque source ($E_i$) au détecteur ($R$) étant déterminée en fonction des retards associés à chaque configuration déterminée et des directions d'arrivée ($\theta$) des impulsions correspondant auxdits retards.

5. Procédé selon la revendication 4, dans lequel chaque configuration permet de déterminer les distances ($RE_i$) respectives de deux des sources ($E_i$) à localiser au détecteur ($R$), lesdites distances ($RE_i$) étant calculées :

○ pour chaque première configuration à partir des équations suivantes :

$$\begin{cases} RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4mm] RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \end{cases}$$

○ pour chaque deuxième configuration à partir des équations suivantes :

$$\begin{cases} \dfrac{\Delta_{E_{i_1},S_{n_1}}{}^2 + 2\Delta_{E_{i_1},S_{n_1}} \cdot RE_{i_1}}{2\Delta_{E_{i_1},S_{n_1}} + 2\left(1 - \cos\left(\alpha_{E_{i_1},S_{n_1}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4mm] RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \end{cases}$$

ou

$$\begin{cases} RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4mm] \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \end{cases}$$

○ pour chaque troisième configuration à partir des équations suivantes :

$$\begin{cases} \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4mm] \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \end{cases}$$

Où

- $\Delta_{E_{i_1},S_{n_1}} = c.\tau_{E_{i1},S_{n1}}$, $\Delta_{E_{i_2},S_{n_2}} = c.\tau_{E_{i2},S_{n2}}$, $\Delta_{E_{i_2},S_{n_1}} = c.\tau_{E_{i2},S_{n1}}$, $\Delta_{E_{i_1},S_{n_2}} = c.\tau_{E_{i1},S_{n2}}$,
- $RE_{i_1}$ est la distance de la première source ($E_{i1}$) au détecteur (R),
- $RE_{i_2}$ est la distance de la deuxième source ($E_{i2}$) au détecteur (R),
- c est la vitesse de propagation des ondes électromagnétiques,
- $\tau_{E_{i1},S_{n1}}$ est la différence de date d'arrivée entre les impulsions reçues par réflexion sur un premier réflecteur ($S_{n_1}$) par rapport aux impulsions reçues en direct de la première source ($E_{i1}$),
- $\tau_{E_{i2},S_{n2}}$ est la différence de date d'arrivée entre les impulsions reçues par réflexion sur un deuxième réflecteur ($S_{n_2}$) par rapport aux impulsions reçues en direct de la deuxième source ($E_{i2}$),
- $\tau_{E_{i2},S_{n1}}$ est la différence de date d'arrivée entre les impulsions reçues par réflexion sur le premier réflecteur ($S_{n_1}$) par rapport aux impulsions reçues en direct de la deuxième source ($E_{i2}$),
- $\tau_{E_{i1},S_{n2}}$ est la différence de date d'arrivée entre les impulsions reçues par réflexion sur le deuxième réflecteur ($S_{n_2}$) par rapport aux impulsions reçues en direct de la première source ($E_{i1}$),
- $\alpha_{E_{i_2},S_{n_2}}$ est l'écart angulaire entre la deuxième source ($E_{i2}$) et le deuxième réflecteur ($S_{n_2}$) vu depuis le détecteur (R),
- $\alpha_{E_{i_1},S_{n_1}}$ est l'écart angulaire entre la première source ($E_{i1}$) et le premier réflecteur ($S_{n_1}$) vu depuis le détecteur (R),
- $\alpha_{E_{i_2},S_{n_1}}$ est l'écart angulaire entre la deuxième source ($E_{i2}$) et le premier réflecteur ($S_{n_1}$) vu depuis le détecteur (R), et
- $\alpha_{E_{i_1},S_{n_2}}$ est l'écart angulaire entre la deuxième source ($E_{i2}$) et le premier réflecteur ($S_{n_1}$) vu depuis le détecteur (R).

6. Procédé selon la revendication 4 ou 5, dans lequel, la ou les configurations identifiées pour chaque couple de sous-ensembles directs ($\{I(CTI_j, \Theta_{kE}, t, p)\}_E$) permettent d'obtenir au moins une distance ($RE_i$) de chaque source ($E_i$) au détecteur (R), la distance ($RE_i$) déterminée pour chaque source ($E_i$) étant la distance la plus occurrente parmi la ou les valeurs de distance obtenues pour ladite source ($E_i$).

7. Procédé selon l'une quelconque des revendications 4 à 6, dans lequel la ou les configurations identifiées pour chaque couple de sous-ensembles directs ($\{I(CTI_j, \Theta_{kE}, t, p)\}_E$) permettent, également, d'obtenir au moins une distance ($RS_n$) de chaque réflecteur ($S_n$) au détecteur (R).

8. Procédé selon l'une quelconque des revendications 1 à 7, dans lequel l'étape de calcul des différences de date d'arrivée ($\tau$) de chaque paire comprend l'élimination des différences de date d'arrivée ($\tau$) strictement supérieures à un quatrième seuil prédéterminé et dont le nombre d'occurrence est supérieur ou égal à un cinquième seuil prédéterminé.

9. Procédé selon l'une quelconque des revendications 1 à 8, dans lequel les caractéristiques invariantes (CTI) de chaque impulsion comprennent au moins l'une des caractéristiques parmi : la largeur de l'impulsion, la fréquence porteuse de l'impulsion et la modulation intra-impulsion intentionnelle.

10. Détecteur (R) de localisation d'au moins deux sources ($E_i$) d'émission d'impulsions électromagnétiques dans un environnement, l'environnement comprenant au moins deux réflecteurs ($S_n$), le détecteur (R) étant propre à mettre en œuvre les étapes du procédé selon l'une quelconque des revendications 1 à 9.

**Patentansprüche**

1. Verfahren zum Lokalisieren von mindestens zwei Quellen ($E_i$) zum Senden elektromagnetischer Pulse in einer Umgebung, wobei die Umgebung mindestens zwei Reflektoren ($S_n$) aufweist, wobei das Verfahren die folgenden Schritte aufweist:

   - Empfangen, mittels eines Detektors (R), für jede Quelle ($E_i$), die zu lokalisieren ist, von mindestens einem gleichen gesendeten Puls, der einerseits direkt von der besagten Quelle ($E_i$) empfangen wird und andererseits mittels Reflexion an dem einen der Reflektoren ($S_n$) empfangen wird,
   - Messen der Ankunftsrichtung ($\theta$), des Ankunftszeitpunkts (t), der Leistung (p) und mindestens eines invarianten technischen Charakteristikums (CTI) von jedem empfangenen Puls,
   - Identifizieren von direkten Sub-Gruppen ($\{I(CTI_j, \Theta_{kE}, t, p)\}_E$) und von reflektierten Sub-Gruppen ($\{I(CTI_j, \Theta_{kS}, t, p)\}_S$), wobei jede direkte Sub-Gruppe ($\{I(CTI_j, \Theta_{kE}, t, p)\}_E$) direkt von einer gleichen Quelle ($E_i$), die zu lokalisieren ist, empfangene Pulse aufweist, wobei jede reflektierte Sub-Gruppe ($\{I(CTI_j, \Theta_{kS}, t, p)\}_S$) mittels einer gleichen Quelle ($E_i$), die zu lokalisieren ist, gesendete und nach Reflexion an einem gleichen Reflektor ($S_n$) empfangene Pulse aufweist,
   - Regruppieren je Paar von direkten Sub-Gruppen ($\{I(CTI_j, \Theta_{kE}, t, p)\}_E$) mit reflektierten Sub-Gruppen ($\{I(CTI_j, \Theta_{kS}, t, p)\}_S$), wobei die Pulse der Sub-Gruppen von jedem Paar die gleichen invarianten technischen Charakteristika (CTI) haben,
   - Berechnen für jedes Paar von Differenzen ($\tau$) von Ankunftszeitpunkten zwischen den Pulsen der reflektierten Sub-Gruppe ($\{I(CTI_j, \Theta_{kS}, t, p)\}_S$) und den Pulsen der direkten Sub-Gruppe ($\{I(CTI_j, \Theta_{kE}, t, p)\}_E$) des Paares,
   - Ermitteln des Abstandes ($RE_i$) jeder Quelle ($E_i$) zum Detektor (R) ausgehend von den berechneten Differenzen ($\tau$) von Ankunftszeitpunkten und den Ankunftsrichtungen ($\theta$) der Pulse von jedem Paar,

   **dadurch gekennzeichnet, dass** der Schritt des Identifizierens aufweist:

   - das Regruppieren in Sub-Gruppen ($\{I(CTI_j, \Theta_k, t, p)\}$) von empfangenen Pulsen mit gleichen invarianten technischen Charakteristika (CTI) und mit gleichen Ankunftsrichtungen ($\theta$),
   - das Ermitteln der maximalen Leistung ($P_{max}(CTI_j, \Theta_k)$) der Pulse von jeder Sub-Gruppe ($\{I(CTI_j, \Theta_k, t, p)\}$) und der Anzahl an Pulsen ($NI(CTI_j, \Theta_k)$) von jeder Sub-Gruppe ($\{I(CTI_j, \Theta_k, t, p)\}$),
   - für jede Sub-Gruppe ($\{I(CTI_j, \Theta_k, t, p)\}$), wenn eine erste Bedingung erfüllt ist, dann weist die Sub-Gruppe ($\{I(CTI_j, \Theta_k, t, p)\}$) direkt empfangene Pulse auf, wobei die erste Bedingung stipuliert, dass die für die besagte Sub-Gruppe ($\{I(CTI_j, \Theta_k, t, p)\}$) ermittelte maximale Leistung ($P_{max}(CTI_j, \Theta_k)$) größer oder gleich einem ersten vorbestimmten Schwellenwert der Leistung ($P_1$) ist und dass die für die besagte Sub-Gruppe ($\{I(CTI_j, \Theta_k, t, p)\}$) ermittelte Anzahl an Pulsen ($NI(CTI_j, \Theta_k)$) gleich der maximalen Anzahl an Pulsen von den Anzahlen an Pulsen ($NI(CTI_j, \Theta_k)$) der Sub-Gruppen ($\{I(CTI_j, \Theta_k, t, p)\}_k$) mit gleichen invarianten technischen Charakteristika ($CTI_j$) wie der besagten Sub-Gruppe ($\{I(CTI_j, \Theta_k, t, p)\}$) ist unabhängig von der Ankunftsrichtung ($\Theta_k$) der besagten Sub-Gruppen ($\{I(CTI_j, \Theta_k, t, p)\}_k$),
   - für jede Sub-Gruppe ($\{I(CTI_j, \Theta_k, t, p)\}$), wenn eine zweite Bedingung erfüllt ist, dann werden die Pulse der besagten Sub-Gruppe ($\{I(CTI_j, \Theta_k, t, p)\}$) als in Reflexion empfangen identifiziert und die Sub-Gruppe ist eine reflektierte Sub-Gruppe ($\{I(CTI_j, \Theta_{kS}, t, p)\}_S$), wobei die zweite Bedingung stipuliert, dass die maximale für die besagte Sub-Gruppe ($\{I(CTI_j, \Theta_k, t, p)\}$) ermittelte Leistung strikt kleiner ist als ein zweiter vorbestimmter Schwellenwert der Leistung ($P_2$) und dass die für die besagte Sub-Gruppe ($\{I(CTI_j, \Theta_k, t, p)\}$) ermittelte Anzahl an Pulsen ($NI(CTI_j, \Theta_k)$) strikt kleiner ist als die maximale Anzahl an Pulsen von den Anzahlen an Pulsen ($NI(CTI_j, \Theta_k)$) der Sub-Gruppen ($\{I(CTI_j, \Theta_k, t, p)\}_k$) mit gleichen invarianten technischen Charakteristika ($CTI_j$) wie der besagten Sub-Gruppe ($\{I(CTI_j, \Theta_k, t, p)\}$) unabhängig von der Ankunftsrichtung ($\Theta_k$) der besagten Sub-Gruppen ($\{I(CTI_j, \Theta_k, t, p)\}_k$).

2. Verfahren gemäß Anspruch 1, wobei für jede Sub-Gruppe ($\{I(CTI_j, \Theta_k, t, p)\}$), wenn die erste Bedingung erfüllt ist, der Schritt des Identifizierens ferner aufweist:

   - das Ermitteln einer ersten statistischen Verteilung von Unterschieden zwischen den aufeinanderfolgenden Ankunftszeitpunkten der Pulse der besagten Sub-Gruppe ($\{I(CTI_j, \Theta_k, t, p)\}$), welche eine Leistung haben, die größer oder gleich der Hälfte der maximalen Leistung ($P_{max}(CTI_j, \Theta_k)$) ist,
   - das Ermitteln einer zweiten statistischen Verteilung von Unterschieden zwischen den aufeinanderfolgenden Ankunftszeitpunkten der Pulse der besagten Sub-Gruppe ($\{I(CTI_j, \Theta_k, t, p)\}$),
   - wenn die zweite statistische Verteilung identisch mit der ersten statistischen Verteilung ist, dann werden die Pulse der besagten Sub-Gruppe ($\{I(CTI_j, \Theta_k, t, p)\}$) als direkt empfangen identifiziert und die Sub-Gruppe ist eine direkte Sub-Gruppe ($\{I(CTI_j, \Theta_{k_E}, t, p)\}_E$),
- wenn die zweite statistische Verteilung Unterschiede aufweist, die von den Unterschieden der ersten statistischen Verteilung verschieden sind und kleiner oder gleich einem dritten vorbestimmten Schwellenwert ($\tau_S$) sind, dann werden die Pulse, von denen die besagten verschiedenen Unterschiede stammen, als in Reflexion empfangen identifiziert und bilden eine reflektierte Sub-Gruppe ($\{I(CTI_j, \Theta_{k_S}, t, p)\}_S$) und die restlichen Pulse der besagten Sub-Gruppe ($\{I(CTI_j, \Theta_k, t, p)\}$) werden als direkt empfangen identifiziert und bilden eine direkte Sub-Gruppe ($\{I(CTI_j, \Theta_{k_E}, t, p)\}_E$).

**3.** Verfahren gemäß Anspruch 1 oder 2, wobei der Schritt des Ermittelns aufweist, für jede direkte Sub-Gruppe ($\{I(CTI_j, \Theta_{k_E}, t, p)\}_E$), das Ermitteln einer Kartographie, welche die Gesamtheit der Differenzen ($\tau$) des Ankunftszeitpunkts darstellt, welche ausgehend von den Pulsen der besagten direkten Sub-Gruppe ($\{I(CTI_j, \Theta_{k_E}, t, p)\}_E$) berechnet werden, abhängig von den Ankunftsrichtungen ($\theta$) der reflektierten Pulse, welche zu den besagten berechneten Differenzen des Ankunftszeitpunkts ($\tau$) korrespondieren, wobei der Abstand ($RE_i$) jeder Quelle ($E_i$) zum Detektor (R) abhängig von den Kartographien ermittelt wird, welche für jede direkte Sub-Gruppe ($\{I(CTI_j, \Theta_{k_E}, t, p)\}_E$) ermittelt wurden.

**4.** Verfahren gemäß Anspruch 3, wobei für jedes Paar, das aus zwei direkten Sub-Gruppen ($\{I(CTI_j, \Theta_{k_E}, t, p)\}_E$) gebildet ist, deren Pulse unterschiedliche Ankunftsrichtungen ($\theta$) und unterschiedliche invariante technische Charakteristika ($CTI_j$) haben, der Schritt des Ermittelns ferner aufweist das Identifizieren ausgehend von den Kartographien, die für die besagten direkten Sub-Gruppen ($\{I(CTI_j, \Theta_{k_E}, t, p)\}_E$) ermittelt wurden, von einer oder mehreren geometrischen Konfigurationen, wobei jede geometrische Konfiguration aus den folgenden Konfigurationen ausgewählt ist:

- einer ersten Konfiguration, wobei das besagte Paar direkter Sub-Gruppen ($\{I(CTI_j, \Theta_{k_E}, t, p)\}_E$) zu zwei Quellen ($E_i$), die zu lokalisieren sind, korrespondiert, und die mittels der besagten Quellen ($E_i$) ausgesendeten Pulse an zwei Reflektoren ($S_n$) reflektiert werden, wobei der eine der Reflektoren ($S_n$) mit der einen der besagten Quellen ($E_i$) kombiniert ist und der andere Reflektor ($S_n$) mit der anderen der besagten Quellen ($E_i$) kombiniert ist, wobei die erste Konfiguration assoziiert ist mit: einer ersten Verzögerung, die relativ zur Reflexion der Pulse ist, die mittels einer ersten der besagten Quellen ($E_i$) auf den Reflektor ($S_n$), der mit der anderen Quelle ($E_i$) kombiniert ist, gesendet werden, und einer zweiten Verzögerung, die relativ zur Reflexion der Pulse ist, die mittels einer zweiten der besagten Quellen ($E_i$) auf den Reflektor ($S_n$), der mit der anderen Quelle ($E_i$) kombiniert ist, gesendet werden,
- einer zweiten Konfiguration, wobei das besagte Paar direkter Sub-Gruppen ($\{I(CTI_j, \Theta_{k_E}, t, p)\}_E$) zu zwei Quellen ($E_i$), die zu lokalisieren sind, korrespondiert, und die mittels der besagten Quellen ($E_i$) ausgesendeten Pulse an zwei Reflektoren ($S_n$) reflektiert werden, wobei der eine der Reflektoren ($S_n$) verschieden von den besagten Quellen ($E_i$) ist und der andere der Reflektoren ($S_n$) mit der einen der besagten Quellen ($E_i$) kombiniert ist, wobei die zweite Konfiguration assoziiert ist mit: einer ersten Verzögerung, die relativ zur Reflexion der Pulse ist, die mittels einer ersten der besagten Quellen ($E_i$) auf den Reflektor ($S_n$), der mit der anderen Quelle ($E_i$) kombiniert ist, gesendet werden, einer zweiten Verzögerung, die relativ zur Reflexion der Pulse ist, die mittels der ersten der besagten Quellen ($E_i$) auf den verschiedenen Reflektor ($S_n$) gesendet werden, und einer dritten Verzögerung, die relativ zur Reflexion der Pulse ist, die mittels einer zweiten der besagten Quellen ($E_i$) auf den verschiedenen Reflektor ($S_n$) gesendet werden,
- einer dritten Konfiguration, wobei das besagte Paar direkter Sub-Gruppen ($\{I(CTI_j, \Theta_{k_E}, t, p)\}_E$) zu zwei Quellen ($E_i$), die zu lokalisieren sind, korrespondiert, wobei die mittels der besagten Quellen ($E_i$) ausgesendeten Pulse an zwei Reflektoren ($S_n$), die von den besagten Quellen ($E_i$) verschieden sind, reflektiert werden, wobei die dritte Konfiguration assoziiert ist mit: einer ersten Verzögerung, die relativ zur Reflexion der Pulse ist, die mittels einer ersten der besagten Quellen ($E_i$) auf einen ersten der besagten Reflektoren ($S_n$) gesendet werden, einer zweiten Verzögerung, die relativ zur Reflexion der Pulse ist, die mittels einer zweiten der besagten Quellen ($E_i$) auf den ersten der besagten Reflektoren ($S_n$) gesendet werden, einer dritten Verzögerung, die relativ zur Reflexion der Pulse ist, die mittels einer ersten der besagten Quellen ($E_i$) auf einen zweiten der besagten Reflektoren ($S_n$) gesendet werden, und einer vierten Verzögerung, die relativ zur Reflexion der Pulse ist, die mittels der zweiten der besagten Quellen ($E_i$) auf den zweiten der besagten Reflektoren ($S_n$) gesendet werden,

wobei der Abstand ($RE_i$) jeder Quelle ($E_i$) zum Detektor (R) ermittelt wird abhängig von den Verzögerungen, die mit jeder ermittelten Konfiguration assoziiert sind, und den Ankunftsrichtungen ($\theta$) der Pulse, die zu den besagten Verzögerungen korrespondieren.

**5.** Verfahren gemäß Anspruch 4, wobei es jede Konfiguration erlaubt, die jeweiligen Abstände ($RE_i$) von zwei der Quellen ($E_i$), die zu lokalisieren sind, zum Detektor (R) zu ermitteln, wobei die besagten Abstände ($RE_i$) berechnet

werden:

○ für jede erste Konfiguration ausgehend von den folgenden Gleichungen:

$$\begin{cases} RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex] RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \end{cases}$$

○ für jede zweite Konfiguration ausgehend von den folgenden Gleichungen:

$$\begin{cases} \dfrac{\Delta_{E_{i_1},S_{n_1}}{}^2 + 2\Delta_{E_{i_1},S_{n_1}} \cdot RE_{i_1}}{2\Delta_{E_{i_1},S_{n_1}} + 2\left(1 - \cos\left(\alpha_{E_{i_1},S_{n_1}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex] RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} \end{cases}$$

oder

$$\begin{cases} RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex] \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \end{cases}$$

○ für jede dritte Konfiguration ausgehend von den folgenden Gleichungen:

$$\begin{cases} \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex] \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}} \end{cases}$$

wobei

- $\Delta_{E_{i_1},S_{n_1}} = c.\tau_{E_{i1},S_{n1}}$, $\Delta_{E_{i_2},S_{n_2}} = c.\tau_{E_{i2},S_{n2}}$, $\Delta_{E_{i_2},S_{n_1}} = c.\tau_{E_{i2},S_{n1}}$, $\Delta_{E_{i_1},S_{n_2}} = c.\tau_{E_{i1},S_{n2}}$,
- $RE_{i_1}$ der Abstand der ersten Quelle ($E_{i1}$) zum Detektor (R) ist,
- $RE_{i_2}$ der Abstand der zweiten Quelle ($E_{i2}$) zum Detektor (R) ist,
- c die Ausbreitungsgeschwindigkeit elektromagnetischer Wellen ist
- $\tau_{E_{i1},S_{n1}}$ die Ankunftszeitpunkt-Differenz zwischen den mittels Reflexion an einem ersten Reflektor ($S_{n_1}$) empfangenen Pulsen bezüglich der direkt von der ersten Quelle ($E_{i1}$) empfangenen Pulse ist,
- $\tau_{E_{i2},S_{n2}}$ die Ankunftszeitpunkt-Differenz zwischen den mittels Reflexion an einem zweiten Reflektor ($S_{n_2}$) empfangenen Pulsen bezüglich der direkt von der zweiten Quelle ($E_{i2}$) empfangenen Pulse ist,
- $\tau_{E_{i2},S_{n1}}$ die Ankunftszeitpunkt-Differenz zwischen den mittels Reflexion an dem ersten Reflektor ($S_{n_1}$) empfangenen Pulsen bezüglich der direkt von der zweiten Quelle ($E_{i2}$) empfangenen Pulse ist,
- $\tau_{E_{i1},S_{n2}}$ die Ankunftszeitpunkt-Differenz zwischen den mittels Reflexion an dem zweiten Reflektor ($S_{n_2}$)

empfangenen Pulsen bezüglich der direkt von der ersten Quelle ($E_{i1}$) empfangenen Pulse ist,

• $\alpha_{E_{i_2},S_{n_2}}$ der Winkelunterschied zwischen der zweiten Quelle ($E_{i2}$) und dem zweiten Reflektor ($S_{n_2}$) gesehen vom Detektor (R) ist,

• $\alpha_{E_{i_1},S_{n_1}}$ der Winkelunterschied zwischen der ersten Quelle ($E_{i1}$) und dem ersten Reflektor ($S_{n_1}$) gesehen vom Detektor (R) ist,

• $\alpha_{E_{i_2},S_{n_1}}$ der Winkelunterschied zwischen der zweiten Quelle ($E_{i2}$) und dem ersten Reflektor ($S_{n_1}$) gesehen vom Detektor (R) ist, und

• $\alpha_{E_{i_1},S_{n_2}}$ der Winkelunterschied zwischen der zweiten Quelle ($E_{i2}$) und dem ersten Reflektor ($S_{n_1}$) gesehen vom Detektor (R) ist.

6. Verfahren gemäß Anspruch 4 oder 5, wobei die Konfiguration oder die Konfigurationen, die für jedes Paar direkter Sub-Gruppen ($\{I(CTI_j, \Theta_{kE}, t, p)\}_E$) identifiziert werden, es erlauben, mindestens einen Abstand (REi) jeder Quelle ($E_i$) zum Detektor (R) zu erlangen, wobei der für jede Quelle ($E_i$) ermittelte Abstand ($RE_i$) der am häufigsten auftretende Abstand von dem oder den Abstand-Werten ist, die für die besagte Quelle ($E_i$) erlangt werden.

7. Verfahren gemäß irgendeinem der Ansprüche 4 bis 6, wobei die Konfiguration oder die Konfigurationen, die für jedes Paar direkter Sub-Gruppen ($\{I(CTI_j, \Theta_{kE}, t, p)\}_E$) identifiziert werden, es erlauben, gleichermaßen mindestens einen Abstand ($RS_n$) jedes Reflektors ($S_n$) zum Detektor (R) zu erlangen.

8. Verfahren gemäß irgendeinem der Ansprüche 1 bis 7, wobei der Schritt des Berechnens der Differenzen des Ankunftszeitpunkts ($\tau$) von jedem Paar aufweist das Eliminieren von Differenzen des Ankunftszeitpunkts ($\tau$), die strikt größer sind als ein vierter vorbestimmter Schwellenwert und von denen die Anzahl des Auftretens größer oder gleich einem fünften vorbestimmten Schwellenwert ist.

9. Verfahren gemäß irgendeinem der Ansprüche 1 bis 8, wobei die invarianten Charakteristika (CTI) jedes Pulses mindestens eines der Charakteristika aufweisen aus: der Pulsbreite, der Trägerfrequenz des Pulses und der absichtlichen Intra-Puls-Modulation.

10. Detektor (R) zum Lokalisieren von mindestens zwei Quellen ($E_i$) zur Emission elektromagnetischer Pulse in einer Umgebung, wobei die Umgebung mindestens zwei Reflektoren ($S_n$) aufweist, wobei der Detektor (R) imstande ist, die Schritte des Verfahrens gemäß irgendeinem der Ansprüche 1 bis 9 durchzuführen.

**Claims**

1. A method for locating at least two electromagnetic pulse emission sources ($E_i$) in an environment, the environment comprising at least two reflectors ($S_n$), the method comprising the following steps:

- receiving, by a detector (R), for each source ($E_i$) to be located, at least one same emitted pulse, received on the one hand directly from said source ($E_i$) and received on the other hand by reflection on one of the reflectors ($S_n$),
- measuring the arrival direction ($\theta$), the date of arrival (t), the power (p) and at least one invariant technical characteristic (CTI) of each received pulse,
- identifying direct subsets ($\{I(CTI_j, \Theta_{kE}, t, p)\}_E$) and reflected subsets ($\{I(CTI_j, \Theta_{kS}, t, p)\}_S$), each direct subset ($\{I(CTI_j, \Theta_{kE}, t, p)\}_E$) comprising pulses received directly from a same source ($E_i$) to be located, each reflected subset ($\{I(CTI_j, \Theta_{kS}, t, p)\}_S$) comprising pulses emitted by a same source ($E_i$) to be located and received after reflection on a same reflector ($S_n$),
- grouping by pairs of direct subsets ($\{I(CTI_j, \Theta_{kE}, t, p)\}_E$) with reflected subsets ($\{I(CTI_j, \Theta_{kS}, t, p)\}_S$), the pulses of the subsets of each pair having the same invariant technical characteristics (CTI),
- calculating, for each pair, differences ($\tau$) in dates of arrival between the pulses of the reflected subset ($\{I(CTI_j, \Theta_{kS}, t, p)\}_S$) and the pulses of the direct subset ($\{I(CTI_j, \Theta_{kE}, t, p)\}_E$)) of the pair,
- determining the distance ($RE_i$) of each source ($E_i$) from the detector (R) from calculated differences ($\tau$) in dates of arrival ($\theta$) of the pulses of each pair,

**characterized in that** the identification step comprises:

- regrouping received pulses with same invariant technical characteristics (CTI) and same directions of arrival ($\theta$) into subsets ($\{I(CTI_j,\Theta_k,t,p)\}$),
- determining the maximum power ($P_{max}(CTI_j,\Theta_k)$)) of the pulses of each subset ($\{I(CTI_j, \Theta_k,t,p)\}$) and the number of pulses ($NI(CTI_j,\Theta_k)$) of each subset ($\{I(CTI_j, \Theta_k,t,p)\}$),
- for each subset ($\{I(CTI_j,\Theta_k,t,p)\}$), when a first condition is met, then the subset ($\{I(CTI_j, \Theta_k,t,p)\}$) comprises pulses received directly, the first condition stipulating that the maximum power ($P_{max}(CTI_j,\Theta_k)$)) determined for said subset ($\{I(CTI_j,\Theta_k,t,p)\}$) is greater than or equal to a first predetermined power threshold ($P_1$) and the number of pulses ($NI(CTI_j,\Theta_k)$) determined for said subset ($\{I(CTI_j,\Theta_k,t,p)\}$) is equal to the maximum number of pulses from among the number of pulses ($NI(CTI_j,\Theta_k)$) of the subsets ($\{I(CTI_j,\Theta_k,t,p)\}_k$) with same invariant technical characteristics (CTI$_j$) as said subset ($\{I(CTI_j, \Theta_k,t,p)\}$)) irrespective of the direction of arrival ($\Theta_k$) of said subsets ($\{I(CTI_j, \Theta_k,t,p)\}_k$),
- for each subset ($\{I(CTI_j,\Theta_k,t,p)\}$), when a second condition is met, then the pulses of said subset ($\{I(CTI_j, \Theta_k,t,p)\}$) are identified as received reflected ($\{I(CTI_j, \Theta_{kS},t,p)\}_S$), the second condition stipulating that the maximum power determined for said subset ($\{I(CTI_j,\Theta_k,t,p)\}$) is strictly less than a second predetermined power threshold ($P_2$) and the number of pulses ($NI(CTI_j, \Theta_k)$) determined for said subset ($\{I(CTI_j,\Theta_k,t,p)\}$) is strictly less than the maximum number of pulses from among the number of pulses ($NI(CTI_j, \Theta_k)$) of the subsets ($\{I(CTI_j,\Theta_k,t,p)\}_k$) with same invariant technical characteristics (CTI$_j$) as said subset ($\{I(CTI_j,\Theta_k,t,p)\}$)) irrespective of the direction of arrival ($\Theta_k$) of said subsets ($\{I(CTI_j, \Theta_k,t,p)\}_k$).

2. The method according to claim 1, wherein, for each subset ($\{I(CTI_j,\Theta_k,t,p)\}$), when the first condition is met, the identification step further comprises:

- establishing a first statistical distribution of the deviations between the successive dates of arrival of the pulses of said subset ($\{I(CTI_j,\Theta_k,t,p)\}$), having a power greater than or equal to half the maximum power ($P_{max}(CTI_j,\Theta_k)$)),
- establishing a second statistical distribution of the deviations between the successive dates of arrival of the pulses of said subset ($\{I(CTI_j,\Theta_k,t,p)\}$),
- when the second statistical distribution is identical to the first statistical distribution, then the pulses of said subset ($\{I(CTI_j,\Theta_k,t,p)\}$) are identified as received directly and the subset is a direct subset ($\{I(CTI_j, \Theta_{kE}, t,p)\}_E$)),
- when the second statistical distribution comprises deviations different from the deviations of the first statistical distribution and less than or equal to a third predetermined threshold ($\tau_s$), then the pulses from which said different deviations are derived are identified as being received reflected and form a reflected subset ($\{I(CTI_j,\Theta_{kS},t,p)\}_S$) and the remaining pulses of said subset ($\{I(CTI_j,\Theta_k,t,p)\}$) are identified as being received directly and form a direct subset ($\{I(CTI_j,\Theta_{kE},t,p)\}_E$)).

3. The method according to claim 1 or 2, wherein the determination step comprises, for each direct subset ($\{I(CTI_j,\Theta_{kE},t,p)\}_E$)), establishing a map showing all of the differences ($\tau$) in date of arrival calculated from pulses of said direct subset ($\{I(CTI_j, \Theta_{kE}, t,p)\}_E$)), based on directions of arrival ($\theta$) of the reflected pulses corresponding to said calculated differences in date of arrival ($\tau$), the distance ($RE_i$) from each source ($E_i$) to the detector (R) being determined based on maps established for each direct subset ($\{I(CTI_j, \Theta_{kE}, t,p)\}_E$)).

4. The method according to claim 3, wherein for each pair made up of two direct subsets ($\{I(CTI_j, \Theta_{kE}, t,p)\}_E$)), the pulses of which have different directions of arrival ($\theta$) and different invariant technical characteristics (CTI$_j$), the determination step further comprises identifying, from the maps established for said direct subsets ($\{I(CTI_j,\Theta_{kE},t,p)\}_E$)), one or several geometric configurations, each geometric configuration being chosen from among the following configurations:

- a first configuration in which said pair of direct subsets ($\{I(CTI_j,\Theta_{kE},t,p)\}_E$)) corresponds to two sources ($E_i$) to be located, the pulses emitted by said sources ($E_i$) being reflected on two reflectors ($S_n$), one of the reflectors ($S_n$) being combined with one of said sources ($E_i$) and the other reflector ($S_n$) being combined with the other of said sources ($E_i$), the first configuration being associated with: a first delay relative to the reflection of the pulses emitted by a first of said sources ($E_i$) on the reflector ($S_n$) combined with the other source ($E_i$) and a second delay relative to the reflection of the pulses emitted by a second of said sources ($E_i$) on the reflector ($S_n$) combined with the other source ($E_i$),
- a second configuration in which said pair of direct subsets ($\{I(CTI_j, \Theta_{kE},t,p)\}_E$)) corresponds to two sources ($E_i$) to be located, the pulses emitted by said sources ($E_i$) being reflected on two reflectors ($S_n$), one of the reflectors ($S_n$) being combined with one of said sources ($E_i$) and the other of the reflectors ($S_n$) being combined with one of said sources ($E_i$), the second configuration being associated with: a first delay relative to the reflection of the pulses emitted by a first of said sources ($E_i$) on the reflector ($S_n$) combined with the other source ($E_i$), a

second delay relative to the reflection of the emitted pulses by the first of said sources ($E_i$) on the separate reflector ($S_n$), and a third delay relative to the reflection of the pulses emitted by a second of said sources ($E_i$) on the separate reflector ($S_n$),

- a third configuration in which said pair of direct subsets ($\{I(CTI_j, \Theta_{k_E}, t, p)\}_E)$ ) corresponds to two sources ($E_i$) to be located, the pulses emitted by said sources ($E_i$) being reflected on two reflectors ($S_n$) separate from said sources ($E_i$), the third configuration being associated with: a first delay relative to the reflection of the pulses emitted by a first of said sources ($E_i$) on a first of said reflectors ($S_n$), a second delay relative to the reflection of the pulses emitted by a second of said sources ($E_i$) on the first of said reflectors ($S_n$), a third delay relative to the reflection of the pulses emitted by the first of said sources ($E_i$) on a second of said reflectors ($S_n$), and a fourth delay relative to the reflection of the pulses emitted by the second of said sources ($E_i$) on the second of said reflectors ($S_n$),

the distance ($RE_i$) from each source ($E_i$) to the detector ($R$) being determined based on the delays associated with each determined configuration and the directions of arrival ($\theta$) of the pulses corresponding to said delays.

5. The method according to claim 4, wherein each configuration makes it possible to determine the respective distances ($RE_i$) of two of the sources ($E_i$) to be located from the detector ($R$), said distances ($RE_i$) being calculated:

○ for each first configuration from the following equations:

$$
\begin{cases}
RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex]
RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}}
\end{cases}
$$

○ for each second configuration from the following equations:

$$
\begin{cases}
\dfrac{\Delta_{E_{i_1},S_{n_1}}{}^2 + 2\Delta_{E_{i_1},S_{n_1}} \cdot RE_{i_1}}{2\Delta_{E_{i_1},S_{n_1}} + 2\left(1 - \cos\left(\alpha_{E_{i_1},S_{n_1}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex]
RE_{i_2} = \dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}}
\end{cases}
$$

or

$$
\begin{cases}
RE_{i_1} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[4ex]
\dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}}
\end{cases}
$$

○ for each third configuration from the following equations:

$$
\begin{cases}
\dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_1}}{}^2 + 2\Delta_{E_{i_2},S_{n_1}} \cdot RE_{i_2}}{2\Delta_{E_{i_2},S_{n_1}} + 2\left(1 - \cos\left(\alpha_{E_{i_2},S_{n_1}}\right)\right) \cdot RE_{i_2}} \\[2em]
\dfrac{\Delta_{E_{i_1},S_{n_2}}{}^2 + 2\Delta_{E_{i_1},S_{n_2}} \cdot RE_{i_1}}{2\Delta_{E_{i_1},S_{n_2}} + 2\left(1 - \cos\left(\alpha_{E_{i_1},S_{n_2}}\right)\right) \cdot RE_{i_1}} = \dfrac{\Delta_{E_{i_2},S_{n_2}}{}^2 + 2\Delta_{E_{i_2},S_{n_2}} \cdot RE_{i_2}}{2\Delta_{E_{i_2},S_{n_2}} + 2\left(1 - \cos\left(\alpha_{E_{i_2},S_{n_2}}\right)\right) \cdot RE_{i_2}}
\end{cases}
$$

Where

- $\Delta_{E_{i_1},S_{n_1}} = c.\tau_{E_{i1},S_{n1}}$, $\Delta_{E_{i_2},S_{n_2}} = c.\tau_{E_{i2},S_{n2}}$, $\Delta_{E_{i_2},S_{n_1}} = c.\tau_{E_{i2},S_{n1}}$, $\Delta_{E_{i_1},S_{n_2}} = c.\tau_{E_{i1},S_{n2}}$,
- $RE_{i_1}$ is the distance from the first source ($E_{i1}$) to the detector (R),
- $RE_{i_2}$ is the distance from the second source ($E_{i2}$) to the detector (R),
- c is the propagation speed of the electromagnetic waves,
- $\tau_{E_{i1},S_{n1}}$ is the difference in date of arrival among the pulses received by reflection on a first reflector ($S_{n_1}$) relative to the pulses received directly from the first source ($E_{i1}$),
- $\tau_{E_{i2},S_{n2}}$ is the difference in date of arrival among the pulses received reflected on a second reflector ($S_{n_2}$) relative to the pulses received directly from the second source ($E_{i2}$),
- $\tau_{E_{i2},S_{n1}}$ is the difference in date of arrival among the pulses received reflected on the first reflector ($S_{n_1}$) relative to the pulses received directly from the second source ($E_{i2}$),
- $\tau_{E_{i1},S_{n2}}$ is the difference in date of arrival among the pulses received reflected on the second reflector ($S_{n_2}$) relative to the pulses received directly from the first source ($E_{i1}$),
- $\alpha_{E_{i_2},S_{n_2}}$ is the angular deviation between the second source ($E_{i2}$) and the second reflector ($S_{n_2}$) seen from the detector (R),
- $\alpha_{E_{i_1},S_{n_1}}$ is the angular deviation between the first source ($E_{i1}$) and the first reflector ($S_{n_1}$) seen from the detector (R),
- $\alpha_{E_{i_2},S_{n_1}}$ is the angular deviation between the second source ($E_{i2}$) and the first reflector ($S_{n_1}$) seen from the detector (R), and
- $\alpha_{E_{i_1},S_{n_2}}$ is the angular deviation between the second source ($E_{i2}$) and the first reflector ($S_{n_1}$) seen from the detector (R).

6. The method according to claim 4 or 5, wherein the configuration(s) identified for each pair of direct subsets ({I(CTI$_j$, $\Theta_{kE}$, t,p)}$_E$)) make it possible to obtain at least one distance ($RE_i$) from each source ($E_i$) to the detector (R), the distance ($RE_i$) determined for each source ($E_i$) being the most frequently occurring distance from among the distance value(s) obtained for said source ($E_i$).

7. The method according to any one of claims 4 to 6, wherein the configuration(s) identified for each pair of direct subsets ({I(CTI$_j$, $\Theta_{kE}$,t,p)}$_E$)) also make it possible to obtain at least one distance ($RS_n$) from each reflector ($S_n$) to the detector (R).

8. The method according to any one of claims 1 to 7, wherein the step for calculating differences in date of arrival (T) for each pair comprises eliminating differences in date of arrival (T) strictly above a fourth predetermined threshold and for which the number of occurrences is greater than or equal to a fifth predetermined threshold.

9. The method according to any one of claims 1 to 8, wherein the invariant characteristics (CTI) of each pulse comprise at least one of the features from among: the width of the pulse, the carrier frequency of the pulse and the intentional intra-pulse modulation.

10. A detector (R) for locating at least two electromagnetic pulse emission sources ($E_i$) in an environment, the environment comprising at least two reflectors ($S_n$), the detector (R) being able to carry out the steps of the method according to any one of claims 1 to 9.

FIG.1

FIG.2

FIG.3

FIG.4

FIG.5

FIG.6

| Réception des impulsions | | 100 |
|---|---|---|
| ↓ | | |
| Caractérisation des impulsions | | 110 |
| ↓ | | |
| Identification des impulsions reçues en direct et en réfléchi | | 120 |
| ↓ | | |
| Regroupement par paire | | 130 |
| ↓ | | |
| Calcul de différences de dates d'arrivée | | 140 |
| ↓ | | |
| Détermination de la distance de chaque source au détecteur | | 150 |

# FIG.7

FIG.8

FIG.9

## RÉFÉRENCES CITÉES DANS LA DESCRIPTION

### Documents brevets cités dans la description

- US 20110140966 A
- EP 2428810 A
- US 20150323642 A